# EUROPEAN PATENT APPLICATION

(11) **EP 4 539 234 A1**
(43) Date of publication of application: **16.04.2025**
(21) Application number: 23822600.5
(22) Date of filing: 04.01.2023
(51) Int. Cl.: H01M 50/40

(54) **SLURRY AND PREPARATION METHOD THEREFOR AND APPLICATION THEREOF, RECHARGEABLE BATTERY ASSEMBLY AND PREPARATION METHOD THEREFOR, ISOLATING MEMBRANE ROLL AND PREPARATION METHOD THEREFOR, MANUFACTURING METHOD AND DEVICE FOR ELECTRODE ASSEMBLY, AND RECHARGEABLE BATTERY AND ELECTRIC DEVICE**

(30) Priority: 17.06.2022 WO PCT/CN2022/099551; 17.06.2022 WO PCT/CN2022/099483
(71) Applicant: Contemporary Amperex Technology Co., Limited, Ningde, Fujian 352100 (CN)
(72) Inventor: LI, Cheng, Ningde, Fujian 352100 (CN); XU, Chong, Ningde, Fujian 352100 (CN); YANG, Jianrui, Ningde, Fujian 352100 (CN)
(74) Representative: Gong, Jinping
(86) International application number: PCT/CN2023/070335
(87) International publication number: WO 2023/241028

(57) **Abstract**

This application relates to a separator roll and a preparation method thereof. The separator roll includes a separator body, the separator body having a head end and a tail end in a length direction and being constructed to be capable of winding in the length direction to form a separator roll with the tail end as a roll core. A warning coating is provided on the separator body, the warning coating being configured to be spaced from the tail end by a first preset length. In this way, the warning coating provides a warning in advance for the position of the tail end of the separator body on which the warning coating is located. When the warning coating is detected, it indicates that at that point, there is still a first preset length away from the tail end of the separator body, so that the position of the tail end of the separator body is predicted in advance and adjustment can be performed accordingly, to avoid a lack of separator body caused by insufficient length of its tail end or a non-separator body structure connected to the tail end being directly wound into the electrode assembly, thereby guaranteeing the production quality and winding efficiency of the electrode assembly.

## Description

### CROSS-REFERENCE TO RELATED APPLICATIONS

This application claims priority to the PCT international application No. PCT/CN2022/099551 filed on June 17, 2022 and entitled "MANUFACTURING METHOD AND DEVICE OF ELECTRODE ASSEMBLY, BATTERY CELL, BATTERY, AND ELECTRIC DEVICE", which is incorporated herein by reference in its entirety.

This application claims priority to the PCT application No. PCT/CN2022/099483 filed on June 17, 2022 and entitled "SEPARATOR ROLL AND PREPARATION METHOD THEREOF", which is incorporated herein by reference in its entirety.

### TECHNICAL FIELD

This application relates to the field of battery technologies, and in particular, to a slurry and a preparation method and application thereof, a secondary battery assembly and a preparation method thereof, a separator roll and a preparation method thereof, a manufacturing method and device of electrode assembly, a secondary battery, and an electric device.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development. An electrode assembly (also referred to as a jelly roll) is an important part of a battery, and in the process of producing an electrode assembly, a separator body needs to be provided as an important insulating component.

The finished separator body is generally wound to form a separator roll, and an insulating connecting member is provided between adjacent separators so that all separator bodies are connected into a whole. In a subsequent manufacturing process, a winding process needs to be performed for the separator body in the separator roll to ultimately obtain the electrode assembly.

However, in the winding process, a phenomenon is likely to occur in which a lack of separator body happens or a connecting member between adjacent separator bodies is wound into the electrode assembly, leading to low production quality and production efficiency of the electrode assembly.

### SUMMARY

In view of this, this application provides a slurry and a preparation method thereof, application of the slurry in preparing a warning coating in a secondary battery, a secondary battery assembly and a preparation method thereof, a separator roll and preparation method thereof, a manufacturing method and device of electrode assembly, a battery cell, a battery, and an electric device, so as to reduce scrapping caused by a lack of separator or a connecting member being wound into an electrode assembly during production of electrode assemblies, improving production quality and production efficiency of the electrode assemblies.

According to a first aspect, this application provides a separator roll including: a separator body, the separator body having a head end and a tail end in length direction and being constructed to be capable of winding in the length direction to form a separator roll with the tail end as a roll core; and a warning coating provided on the separator body, the warning coating being configured to be spaced from the tail end by a first preset length.

In this application, the warning coating provides a warning in advance for the position of the tail end of the separator body on which the warning coating is located. When the warning coating is detected, it indicates that at that point, there is still a first preset length away from the tail end of the separator body, so that the position of the tail end of the separator body is predicted in advance and adjustment can be performed accordingly, to avoid a lack of separator body caused by insufficient length of its tail end during winding of the separator body or a non-separator body structure connected to the tail end being directly wound into the electrode assembly, thereby guaranteeing the production quality and winding efficiency of the electrode assembly.

In some embodiments, the separator roll includes a plurality of separator bodies, every two adjacent separator bodies being connected head-to-tail by a connecting member, with a tail end of the separator body in the innermost layer forming the roll core. With arrangement of the connecting members, the plurality of separator bodies can be wound on a single separator roll. In this case, with arrangement of the warning coating, a specific position of the connecting member can be obtained to avoid a phenomenon that the connecting member between two adjacent separator bodies is wound into the electrode assembly in the high-speed winding process of the electrode assembly to form an unacceptable electrode assembly which will affect the production quality of the electrode assembly.

In some embodiments, a warning coating is provided on each of the separator bodies. The warning coating is used for providing a position warning for the tail end of the separator body on which the warning coating is located, so as to avoid a lack of separator body caused by insufficient length of its tail end in the high-speed winding process of the electrode assembly.

In some embodiments, the warning coating is provided on at least one surface of the separator body, and the warning coating extends along the length direction and/or width direction of the separator body such that the warning coating has sufficient dimensions in the width direction and/or the length direction of the separator body to guarantee that the warning coating can be detected by a detection apparatus.

In some embodiments, the warning coating has a second preset length in the length direction of the separator body, the second preset length being in the range of 1-1000 mm.

In some embodiments, the second preset length is in the range of 10-50 mm.

In this way, ensuring the second preset length of the warning coating allows for a sufficient detection distance when the warning coating passes by the external detection apparatus, thereby guaranteeing effective detection of the warning coating.

In some embodiments, in the width direction of the separator body, distances between two side edges of the warning coating and two side edges of the separator body are in the range of 1-1000 mm.

In some embodiments, in the width direction of the separator body, the distances between the two side edges of the warning coating and the two side edges of the separator body are in the range of 5-30 mm.

This can guarantee effective detection of the warning coating by the external detection apparatus, and can avoid mutual influence between the warning coating and a tab.

In some embodiments, the warning coating is formed by mixing one or more of rubber, polyacrylic acid, polymethacrylic acid, methyl polyacrylate, ethyl acrylate, pure acrylic emulsion, polyacrylic acid-styrene copolymer, polyvinylpyrrolidone, styrene-butadiene rubber, epoxy resin, neopentyl glycol diacrylate, sodium polyacrylate series, fluorine-containing polyolefins, and the like, to quickly form the warning coating.

In some embodiments, an RGB difference between the separator body and the warning coating is (a, b, c), where 1 ≤ a ≤ 225, 1 ≤ b ≤ 225, and 1 ≤ c ≤ 225, to guarantee that the warning coating is clearly distinguishable from the separator body in color and therefore can be identified to produce a warning effect.

In some embodiments, the connecting member includes a splicing adhesive formed by mixing one or more of polyethylene terephthalate, epoxy resin, polyurethane, unsaturated polyester resin, phenolic resin, polyacrylic resin, polyvinyl chloride resin, polysulfide rubber, silicone rubber, polyurethane rubber, neoprene rubber, and butyl rubber, to bond a head end and a tail end for two adjacent separator bodies. The splicing adhesive formed therefrom has excellent physical and mechanical properties, frictional resistance, dimensional stability, and electrical insulation in a wide temperature range, with a long-term use temperature of up to 120°C, thereby insulatively connecting the adjacent separator bodies.

According to a second aspect, this application provides a preparation method of separator roll, including the following steps:
providing a separator body, the separator body having a head end and a tail end formed in its length direction;
arranging a warning coating on the separator body, the warning coating being configured to be spaced from the tail end by a first preset length; and
winding the separator body in the length direction to form a separator roll with the tail end as a roll core.

In this way, the warning coating provides a warning for the position of the tail end of the separator body in advance.

In some embodiments, the providing a separator body specifically includes: providing a plurality of separator bodies, with every two separator bodies being connected head-to-tail. A plurality of separator bodies may be wound on a single separator roll. Implementation of continuous winding and continuous peel-off of the separator bodies improves production efficiency.

In some embodiments, the every two separator bodies being connected head-to-tail specifically includes:
connecting a head end and a tail end for every two separator bodies by a connecting member.

With arrangement of the connecting members, the plurality of separator bodies can be wound on a single separator roll. In this case, with arrangement of the warning coating, a specific position of the connecting member can be obtained to avoid a phenomenon that the connecting member between two adjacent separator bodies is wound into the electrode assembly in the high-speed winding process of the electrode assembly to form an unacceptable electrode assembly which will affect the production quality of the electrode assembly.

The connecting a head end and a tail end for every two separator bodies by a connecting member specifically includes:
providing and mixing one or more of polyethylene terephthalate, epoxy resin, polyurethane, unsaturated polyester resin, phenolic resin, polyacrylic resin, polyvinyl chloride resin, polysulfide rubber, silicone rubber, polyurethane rubber, neoprene rubber, and butyl rubber to form a splicing adhesive to bond a head end and a tail end for every two separator bodies.

When it is necessary to wind a plurality of separator bodies onto a separator roll, the splicing adhesive is applied at connection positions of every two separator bodies so that the plurality of separator bodies are connected and wound to form a separator roll. When a separator body needs to be peeled off from the separator roll, the warning coating is used for providing a warning in advance for the position of the splicing adhesive, prompting an operator to process the splicing adhesive to prevent the splicing adhesive from being wound with the separator body into the electrode assembly and thereby affecting the product yield rate of the electrode assembly.

In some embodiments, the arranging a warning coating on the separator body specifically includes: arranging one warning coating on each of the separator bodies. The warning coating is used for providing a position warning for the tail end of the separator body on which the warning coating is located, so as to avoid a lack of separator body caused by insufficient length of its tail end in the high-speed winding process of the electrode assembly.

In some embodiments, the arranging a warning coating on the separator body further includes:
applying the warning coating onto at least one surface of the separator body. Direct application of the warning coating onto the surface of the separator body allows for the simple and quick formation of the warning coating that can be detected by an external detection apparatus without causing damage to the surface of the separator body.

In some embodiments, the arranging a warning coating on the separator body further includes:
applying the warning coating along the length direction of the separator body and applying the warning coating along a width direction of the separator body. This allows the warning coating to have sufficient dimensions in the width direction and/or the length direction of the separator body to guarantee that the warning coating can be detected by an external setting.

In some embodiments, the applying the warning coating along the length direction of the separator body specifically includes:
applying the warning coating having a second preset length in the length direction of the separator body, the second preset length being in the range of 1-1000 mm.

In some embodiments, the applying the warning coating along the length direction of the separator body further includes:
applying the warning coating having a second preset length in the length direction of the separator body, the second preset length being in the range of 10-50 mm.

In this way, ensuring the second preset length of the warning coating allows for a sufficient detection distance when the warning coating passes by the external detection apparatus, thereby guaranteeing effective detection of the warning coating.

In some embodiments, the applying the warning coating along a width direction of the separator body further includes:
applying the warning coating in the width direction of the separator body until distances between two side edges of the warning coating and two side edges of the separator body are in the range of 1-1000 mm.

In some embodiments, the applying the warning coating along a width direction of the separator body further includes:
applying the warning coating in the width direction of the separator body until distances between two side edges of the warning coating and two side edges of the separator body are in the range of 5-30 mm.

This can guarantee effective detection of the warning coating by the external detection apparatus, and can avoid mutual influence between the warning coating and a tab.

In some embodiments, before the arranging a warning coating on the separator body, the preparation method of separator roll further includes:
providing a warning coating, the warning coating being formed by mixing one or more of rubber, polyacrylic acid, polymethacrylic acid, methyl polyacrylate, ethyl acrylate, pure acrylic emulsion, polyacrylic acid-styrene copolymer, polyvinylpyrrolidone, styrene-butadiene rubber, epoxy resin, neopentyl glycol diacrylate, sodium polyacrylate series, and fluorine-containing polyolefins.

In this way, the warning coating can be quickly formed on the surface of the separator body. In some illustrative embodiments, a 5# adhesive made of natural rubber, with a faster setting time and higher bonding strength, may alternatively be used.

According to a third aspect, this application provides a manufacturing method of electrode assembly, including the following steps: providing roll materials, the roll materials including a positive electrode plate roll, a separator roll, and a negative electrode plate roll, where at least one of the positive electrode plate roll, the separator roll, and the negative electrode plate roll is provided with a warning coating; stacking and winding a positive electrode plate in the positive electrode plate roll, a separator body in the separator roll, and a negative electrode plate in the negative electrode plate roll; and in the winding process, detecting whether the warning coating is provided on at least one of the positive electrode plate roll, the separator roll, and the negative electrode plate roll.

In some embodiments, the manufacturing method of electrode assembly includes the following steps:
providing roll materials, the roll materials including a positive electrode plate roll, the separator roll in any one of the foregoing embodiments, and a negative electrode plate roll, where the separator roll includes a separator body and a warning coating provided on the separator body, the separator roll has a head end and a tail end formed on two ends in its own winding direction, and the warning coating is configured to be spaced from the tail end by a first preset length;
stacking and winding a positive electrode plate in the positive electrode plate roll, a separator body in the separator roll, and a negative electrode plate in the negative electrode plate roll; and
in the winding process, detecting whether the warning coating is provided on the separator body.

In this way, detection of the warning coating allows for a warning in advance for the tail end of the separator body, so as to avoid a lack of separator body caused by insufficient length of the tail end or a non-separator body structure connected to the tail end being directly wound into the electrode assembly.

In some embodiments, in the manufacturing method of electrode assembly, the positive electrode plate in the positive electrode plate roll includes a positive electrode plate body and a warning coating provided on the positive electrode plate body, and whether the warning coating is provided on the positive electrode plate body is detected in the winding process; and/or the negative electrode plate in the negative electrode plate roll includes a negative electrode plate body and a warning coating provided on the negative electrode plate body, and whether the warning coating is provided on the positive electrode plate body is detected in the winding process.

In some embodiments, after the detecting whether the warning coating is provided on the separator body, the manufacturing method of electrode assembly further includes:
if yes, controlling the positive electrode plate and the negative electrode plate to stop winding, controlling a winding apparatus to pull the separator roll to continue winding for a distance greater than or equal to the first preset length, and then stop winding.

This avoids a phenomenon that the connecting member is wound into the electrode assembly or a situation in which a shortage of the tail end of the separator body affects the quality of the electrode assembly.

In some embodiments, the controlling the positive electrode plate and the negative electrode plate to stop winding specifically includes controlling a cutting member to cut off the positive electrode plate and controlling the cutting member to cut off the negative electrode plate.

The cutting member is arranged at a position close to a winding structure of the winding apparatus, to separate a negative electrode plate and a positive electrode plate wound onto the winding mechanism from the negative electrode plate roll and the positive electrode plate roll, so that the winding of the positive electrode plate and the negative electrode plate is stopped earlier.

In some embodiments, after the pulling the separator roll for a distance greater than or equal to the first preset length, and then stopping winding, the manufacturing method further includes controlling the cutting member to cut off the separator body.

When the cutting member is controlled to cut off the separator body, the connecting member is also cut from the separator roll to prevent the connecting member from affecting a next winding of electrode assembly.

In some embodiments, the detecting, by using a detection apparatus, whether the warning coating is provided on the separator roll specifically includes:
placing the detection apparatus on a delivery path of the winding structure of the winding apparatus on which the separator body is wound; and detecting, by the detection apparatus, whether there is the warning coating on the separator body at a position directly facing the detection apparatus.

All separator bodies will be wound onto the winding apparatus through this delivery path to form final electrode assemblies. The detection apparatus is arranged matching the warning coating, so as to identify the warning coating.

In some embodiments, the detecting, by using the detection apparatus, whether there is the warning coating on the separator body at a position directly facing the detection apparatus specifically includes:
detecting whether there is a region on the separator body that has a color difference with the separator body and an RGB difference between the separator body and the warning coating is (a, b, c), where 1 ≤ a ≤ 225, 1 ≤ b ≤ 225, and 1 ≤ c ≤ 225.

The RGB color difference values between the separator body and the warning coating are limited in the range of 1-225, to guarantee that the warning coating is clearly distinguishable from the separator body in color and therefore can be identified to produce a warning effect.

In some embodiments, the detecting, by using the detection apparatus, whether there is the warning coating on the separator body at a position directly facing the detection apparatus specifically includes:
detecting whether there is a region on the separator body that has a color difference with the separator body and an RGB difference between the separator body and the warning coating is (a, b, c), where 1 ≤ a ≤ 220, 1 ≤ b ≤ 220, and 1 ≤ c ≤ 220. Within this range, the warning coating is clearly distinguishable from the separator body in color.

In some embodiments, the providing a separator roll specifically includes: providing a plurality of separator bodies, with each of the separator bodies having a head end and a tail end formed on two ends in its own length direction; connecting a head end and a tail end for every two separator bodies; and winding the separator bodies in the length direction to form the separator roll.

In this way, the warning coating provides a warning in advance for the position of the tail end of the separator body on which the warning coating is located. When the warning coating is detected, it indicates that at that point, there is still a first preset length away from the tail end of the separator body, so that the position of the tail end of the separator body is predicted in advance and adjustment can be performed accordingly, to avoid a lack of separator body caused by insufficient length of its tail end during winding of the separator body or a non-separator body structure connected to the tail end being directly wound into the electrode assembly, thereby guaranteeing the production quality and winding efficiency of the electrode assembly.

In some embodiments, a warning coating is provided on each of the separator bodies. The warning coating is used for providing a position warning for the tail end of the separator body on which the warning coating is located, so as to avoid a lack of separator body caused by insufficient length of its tail end in the high-speed winding process of the electrode assembly.

In some embodiments, after the providing a plurality of separator bodies, the manufacturing method further includes: arranging one warning coating on each of the separator bodies. The warning coating is used for providing a position warning for the tail end of the separator body on which the warning coating is located, so as to avoid a lack of separator body caused by insufficient length of its tail end in the high-speed winding process of the electrode assembly.

In some embodiments, the arranging one warning coating on each of the separator bodies further includes: applying the warning coating along the length direction of the separator body and applying the warning coating along a width direction of the separator body.

This allows the warning coating to have sufficient dimensions in the width direction and/or the length direction of the separator body to guarantee that the warning coating can be detected by an external setting.

In some embodiments, the applying the warning coating along the length direction of the separator body further includes: applying the warning coating having a second preset length in the length direction of the separator body, the second preset length being in the range of 1-1000 mm.

In this way, ensuring the second preset length of the warning coating allows for a sufficient detection distance when the warning coating passes by the external detection apparatus, thereby guaranteeing effective detection of the warning coating.

In some embodiments, the applying the warning coating along the length direction of the separator body further includes: applying the warning coating having a second preset length in the length direction of the separator body, the second preset length being in the range of 10-50 mm.

In some embodiments, the applying the warning coating along a width direction of the separator body further includes: applying the warning coating in the width direction of the separator body until distances between two side edges of the warning coating and two side edges of the separator body are in the range of 1-1000 mm. This can guarantee effective detection of the warning coating by the external detection apparatus, and can avoid mutual influence between the warning coating and a tab.

In some embodiments, the arranging one warning coating on each of the separator bodies further includes:
providing a warning coating, the warning coating being formed by mixing one or more of rubber, polyacrylic acid, polymethacrylic acid, methyl polyacrylate, ethyl acrylate, pure acrylic emulsion, polyacrylic acid-styrene copolymer, polyvinylpyrrolidone, styrene-butadiene rubber, epoxy resin, neopentyl glycol diacrylate, sodium polyacrylate series, and fluorine-containing polyolefins.

The fluorine-containing polyolefin binder may include but is not limited to adhesives made from polyvinylidene fluoride (PVDF), vinylidene fluoride copolymer, or their modified (for example, modified by carboxylic acid, acrylic acid, or acrylonitrile) derivatives.

In this way, the warning coating can be quickly formed on the surface of the separator body. In some illustrative embodiments, a 5# adhesive made of natural rubber, with a faster setting time and higher bonding strength, may alternatively be used.

In some embodiments, the two separator bodies being connected head-to-tail further includes: connecting a head end and a tail end for every two separator bodies by a connecting member.

With arrangement of the connecting members, the plurality of separator bodies can be wound on a single separator roll. In this case, with arrangement of the warning coating, a specific position of the connecting member can be obtained to avoid a phenomenon that the connecting member between two adjacent separator bodies is wound into the electrode assembly in the high-speed winding process of the electrode assembly to form an unacceptable electrode assembly which will affect the production quality of the electrode assembly.

In some embodiments, the connecting a head end and a tail end for every two separator bodies by a connecting member further includes:
providing and mixing one or more of polyethylene terephthalate, epoxy resin, polyurethane, unsaturated polyester resin, phenolic resin, polyacrylic resin, polyvinyl chloride resin, polysulfide rubber, silicone rubber, polyurethane rubber, neoprene rubber, and butyl rubber to form a splicing adhesive to bond a head end and a tail end for every two separator bodies.

When it is necessary to wind a plurality of separator bodies onto a separator roll, the splicing adhesive is applied at connection positions of every two separator bodies so that the plurality of separator bodies are connected and wound to form a separator roll. When a separator body needs to be peeled off from the separator roll, the warning coating is used for providing a warning in advance for the position of the splicing adhesive, prompting an operator to process the splicing adhesive to prevent the splicing adhesive from being wound with the separator body into the electrode assembly and thereby affecting the product yield rate of the electrode assembly.

According to a fourth aspect, this application further provides a manufacturing device for preparing the electrode assembly in any one of the foregoing embodiments, including a winding apparatus and a detection apparatus. The winding apparatus is configured to stack and wind a positive electrode plate in a positive electrode plate roll, a separator body in a separator roll, and a negative electrode plate in a negative electrode plate roll. The detection apparatus is located on a delivery path of the separator body in the separator roll, and the detection apparatus is configured to detect whether a warning coating is provided on the separator body.

According to a fifth aspect, this application further provides a battery cell including a housing and an electrode assembly accommodated in the housing and prepared using the manufacturing method of electrode assembly in any one of the foregoing embodiments.

According to a sixth aspect, this application further provides a battery including the battery cells in the foregoing embodiment.

According to a seventh aspect, this application further provides an electric apparatus including the battery in the foregoing embodiment, where the battery is configured to supply electrical energy.

According to an eighth aspect, this application further provides a slurry applied as a warning coating in a secondary battery. The slurry includes the following raw materials in parts by mass: 1-40 parts of binder, 5-50 parts of pigment, and 30-95 parts of solvent. The use of the slurry in preparation of the warning coating applied to the secondary battery to prepare the warning coating facilitates the identification of the warning coating, and increases the sensitivity of identification of the warning coating, thereby improving the manufacturing yield of electrode assemblies.

According to a ninth aspect, this application further provides a preparation method of slurry, including: mixing the binder, the pigment, and the solvent.

According to a tenth aspect, this application further provides a secondary battery assembly including an assembly body and a warning coating on at least one surface of the assembly body, where the warning coating is prepared from the slurry in the foregoing embodiment.

According to an eleventh aspect, this application further provides a preparation method of secondary battery assembly, including: providing an assembly body, the assembly body having a head end and a tail end formed in its length direction; applying and drying the slurry according to any one of claims 1 to 8 on the assembly body to prepare a warning coating, the warning coating being configured to be spaced from the tail end by a first preset length.

Details of one or more embodiments of this application are set forth in the following accompanying drawings and description. Other features, objectives, and advantages of this application will become apparent from the specification, the accompanying drawings, and the claims.

### BRIEF DESCRIPTION OF DRAWINGS

To describe the technical solutions in the embodiments of this application more clearly, the following briefly describes the accompanying drawings required for describing the embodiments of this application. Apparently, the following description show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic structural diagram of a battery according to some embodiments of this application;
FIG. 3 is a schematic exploded view of a battery cell according to some embodiments of this application;
FIG. 4 is a schematic three-dimensional structural diagram of a separator roll according to an embodiment of this application;
FIG. 5 is a schematic three-dimensional structural diagram of a separator roll according to an embodiment of this application;
FIG. 6 is a schematic diagram of a planar structure with a separator body and a warning coating in a separator roll according to an embodiment of this application;
FIG. 7 is a schematic diagram of a planar structure with a separator body and a warning coating in a separator roll according to an embodiment of this application;
FIG. 8 is a schematic diagram of a planar structure with a separator body and a warning coating in a separator roll according to an embodiment of this application;
FIG. 9 is a schematic diagram of a planar structure with a separator body and a warning coating in a separator roll according to an embodiment of this application;
FIG. 10 is a schematic diagram of a planar structure with a separator body and a warning coating in a separator roll according to an embodiment of this application;
FIG. 11 is a schematic flowchart of a preparation method of separator roll according to an embodiment of this application;
FIG. 12 is a schematic flowchart of a preparation method of separator roll according to an embodiment of this application;
FIG. 13 is a schematic flowchart of a preparation method of separator roll according to an embodiment of this application;
FIG. 14 is a schematic flowchart of a preparation method of separator roll according to an embodiment of this application;
FIG. 15 is a schematic flowchart of a preparation method of separator roll according to an embodiment of this application;
FIG. 16 is a schematic flowchart of a preparation method of separator roll according to an embodiment of this application;
FIG. 17 is a schematic flowchart of a preparation method of separator roll according to an embodiment of this application;
FIG. 18 is a schematic flowchart of a preparation method of separator roll according to an embodiment of this application;
FIG. 19 is a schematic flowchart of a preparation method of separator roll according to an embodiment of this application;
FIG. 20 is a schematic flowchart of a manufacturing method of electrode assembly according to an embodiment of this application;
FIG. 21 is a schematic flowchart of a manufacturing method of electrode assembly according to an embodiment of this application;
FIG. 22 is a schematic flowchart of a manufacturing method of electrode assembly according to an embodiment of this application;
FIG. 23 is a schematic flowchart of a manufacturing method of electrode assembly according to an embodiment of this application;
FIG. 24 is a schematic flowchart of a manufacturing method of electrode assembly according to an embodiment of this application;
FIG. 25 is a schematic flowchart of a manufacturing method of electrode assembly according to an embodiment of this application; and
FIG. 26 is a schematic flowchart of a manufacturing method of electrode assembly according to an embodiment of this application.

1000. vehicle; 100. battery; 200. controller; 300. motor; 10. box; 11. first portion; 12. second portion; 20. battery cell; 21. end cover; 211. electrode terminal; 22. housing; 23. electrode assembly; 2000. separator roll; 231. separator body; a. head end; b. tail end; 232. warning coating; 3000. negative electrode plate roll; 233. negative electrode plate; 4000. positive electrode plate roll; 234. positive electrode plate; 5000. winding apparatus; 6000. detection apparatus; 7000. cutting member; 30. connecting member; 40. support member; L1. first preset length; L2 second preset length; F1. length direction (winding direction); and F2. width direction.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from a perspective of market development, application of battery packs is becoming more and more extensive. Battery packs have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous expansion of application fields of battery packs, market demands for the battery packs are also increasing.

The applicant has noted that in the process of producing electrode assemblies for batteries, the finished separator body as an important insulating component is generally wound to form a separator roll for storage, so as to facilitate use in a subsequent process. A coiled separator roll generally has at least one separator body wound. When a plurality of separator bodies are wound in head-to-tail fashion, an insulating connecting member is provided between adjacent separator bodies so that all separator bodies are connected into a whole. In the subsequent production process of electrode assemblies, the separators are gradually peeled off from the separator roll and stacked with negative electrode plates and positive electrode plates for winding process, thereby ultimately obtaining electrode assemblies.

However, in the process of peeling off the separator body from the separator roll and winding the separator body, the position of the tail end of each separator body cannot be determined. In other words, the position of the connecting member between two adjacent separator bodies cannot be determined or the remaining winding length of the separator body cannot be determined, resulting in an unacceptable phenomenon that the insulating connecting member is wound into the internal structure of the electrode assembly in the winding process or a situation that a lack of separator body is caused by insufficient length of the tail end during winding, thus affecting the production quality and winding efficiency of the electrode assembly.

To improve the production quality of the electrode assembly, the applicant has found through research that a corresponding structure can be provided to detect the position of the tail end of the separator, so as to provide a warning in advance for the position of the tail end of the separator or the connecting member.

Based on the above considerations, to avoid the adverse effects on the production quality and winding efficiency of the electrode assembly products caused by the inability to determine the position of the winding tail end of the separator in the winding process of the separator, the applicant has designed a separator roll through in-depth research. The separator roll includes a separator body and a warning coating provided on the separator body, where the separator body has a head end and a tail end in a length direction and is wound along the length direction to form a separator roll with the tail end as a roll core, and the warning coating is configured to be spaced from the tail end of the separator body on which the warning coating is located by a first preset length. In this case, the warning coating provides a warning in advance for the position of the tail end of the separator body on which the warning coating is located. When the warning coating is detected, it indicates that at that point, there is still a first preset length away from the tail end of the separator body, so that prediction is made in advance and adjustment can be performed accordingly, to avoid a situation that the tail end has an insufficient winding length or the connecting member of the tail end is directly wound into the electrode assembly, thereby guaranteeing the production quality and winding efficiency of the electrode assembly.

The battery disclosed in the embodiments of this application may be used without limitation in electric apparatuses such as vehicles, ships, or aircrafts. The battery disclosed in this application may be used to constitute a power supply system of the electric apparatus. A mounting body involved in this application is a structure for mounting a battery in the electric apparatus.

An embodiment of this application provides an electric apparatus that uses a battery as a power source. The electric device may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

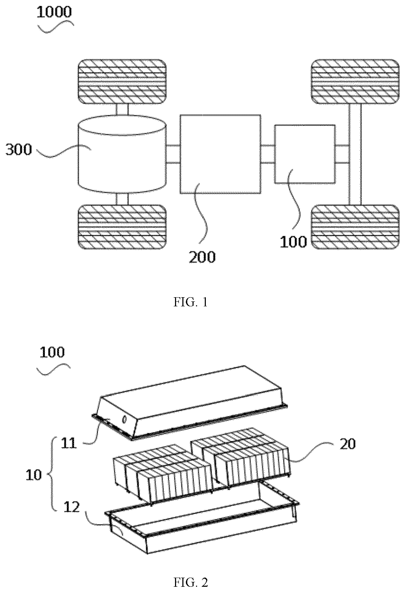

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be positioned at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Refer to FIG. 2. FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 for the first portion 11 and the second portion 12 to jointly define an accommodating space. Alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may have a variety of shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

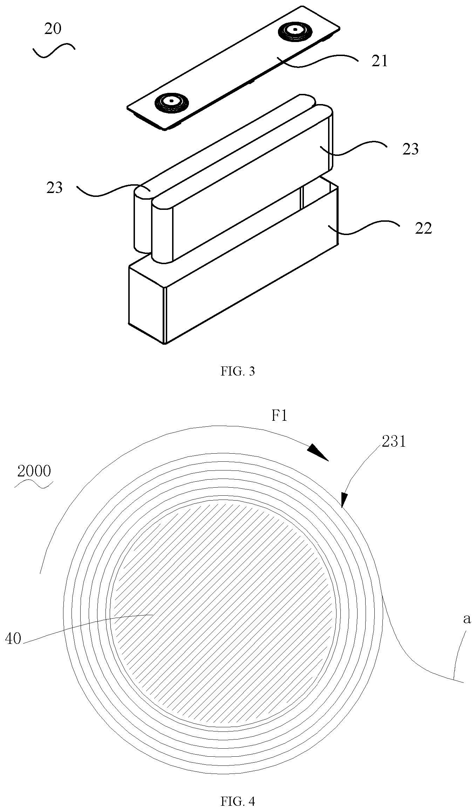

Refer to FIG. 3. FIG. 3 is a schematic structural exploded view of a battery cell 20 according to some embodiments of this application. The battery cell 20 refers to a smallest unit constituting a battery. As shown in FIG. 3, the battery cell 20 includes an end cover 21, a housing 22, an electrode assembly 23, and other functional components.

The end cover 21 refers to a component that covers an opening of the housing 22 to isolate an internal environment of the battery cell 20 from an external environment. A shape of the end cover 21 is not limited and may be adapted to a shape of the housing 22 to fit the housing 22. In some embodiments, the end cover 21 may be made of a material with given hardness and strength (for example, aluminum alloy), so that the end cover 21 is less likely to deform when subjected to extrusion and collision, allowing the battery cell 20 to have higher structural strength and enhanced safety performance. The end cover 21 may be provided with functional components such as an electrode terminal 211. The electrode terminal may be configured to be electrically connected to the electrode assembly 23 for outputting or inputting electrical energy of the battery cell 20. In some embodiments, the end cover 21 may further be provided with a pressure relief structure 24 for releasing internal pressure when the internal pressure or a temperature of the battery cell 20 reaches a threshold. The end cover 21 may also be made of various materials, such as copper, iron, aluminum, stainless steel, aluminum alloy, and plastic, which are not particularly limited in the embodiments of this application. In some embodiments, an insulator may also be provided at an inner side of the end cover 21. The insulator may be configured to isolate an electrically connected component in the housing 22 from the end cover 21 to reduce a risk of short circuit. For example, the insulator may be made of plastic, a rubber, or the like.

The housing 22 is an assembly configured to form an internal environment of the battery cell 20 together with the end cover 21, where the formed internal environment may be configured to accommodate the electrode assembly 23, an electrolyte, and other components. The housing 22 and the end cover 21 may be separate components, an opening may be provided on the housing 22, and the end cover 21 covers the opening to form the internal environment of the battery cell 20. The end cover 21 and the housing 22 are not limited and may also be integrated. Specifically, the end cover 21 and the housing 22 may form a shared connection surface before other components are placed inside the housing, and then the housing 22 is covered with the end cover 21 when inside of the housing 22 needs to be enclosed. The housing 22 may be of various shapes and sizes, such as a rectangular shape, a cylindrical shape, and a hexagonal prism shape. Specifically, a shape of the housing 22 may be determined according to a specific shape and size of the electrode assembly 23. The housing 22 may be made of various materials, such as copper, iron, aluminum, stainless steel, aluminum alloy, and plastic, which are not particularly limited in the embodiments of this application.

The electrode assembly 23 is a component in which electrochemical reactions occur in the battery cell 20. The housing 22 may include one or more electrode assemblies 23. The electrode assembly 23 is mainly formed by winding or stacking a negative electrode plate and a positive electrode plate, and a separator body is generally provided between the negative electrode plate and the positive electrode plate. Parts of the negative electrode plate and the positive electrode plate with active substances constitute a body portion of the electrode assembly, while parts of the negative electrode plate and the positive electrode plate without active substances each constitute a tab. The negative electrode tab and the positive electrode tab may be located at one end of the body portion or be located at two ends of the body portion respectively. During charging and discharging of the battery, a negative electrode active substance and a positive electrode active substance react with an electrolyte, and the tabs are connected to electrode terminals to form a current loop.

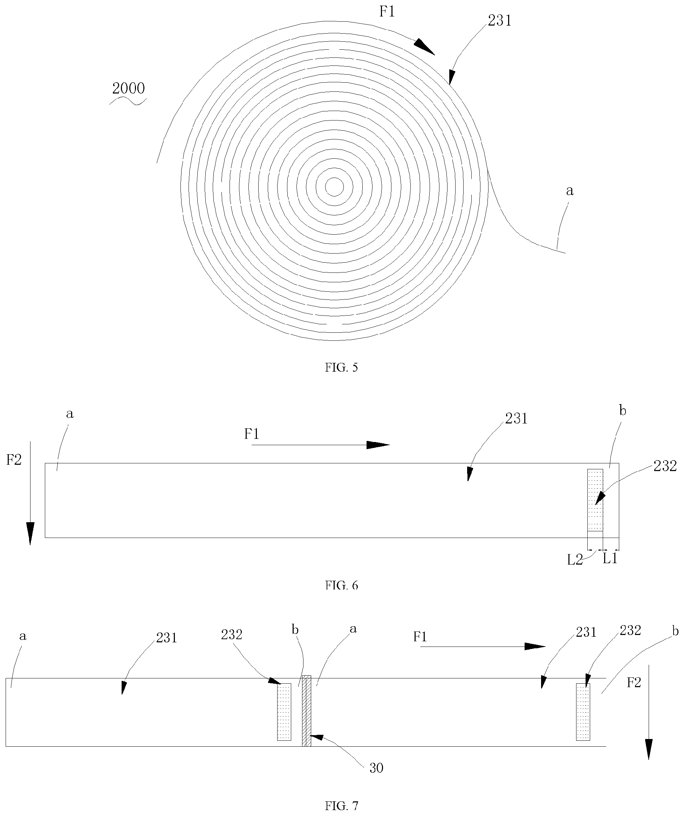

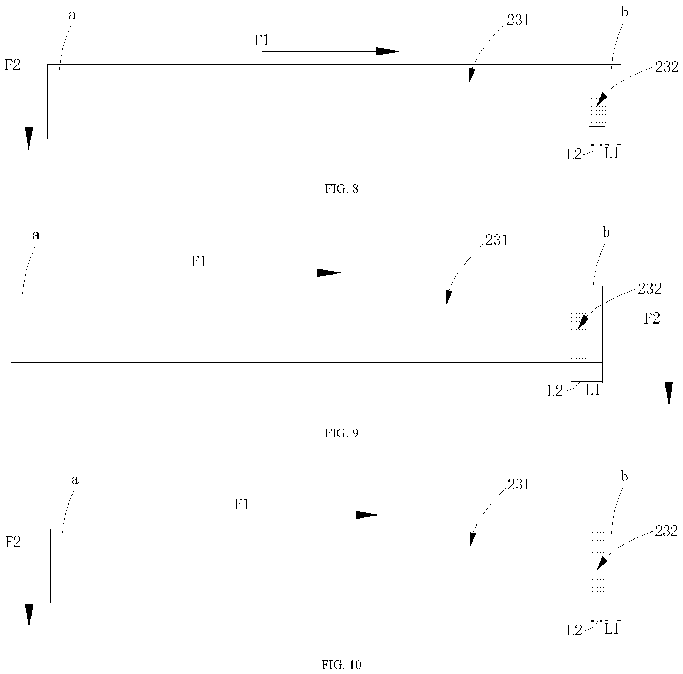

According to some embodiments of this application, referring to FIG. 4 and FIG. 5, and further referring to FIG. 6 to FIG. 8, this application provides a separator roll 2000 including a separator body 231 and a warning coating 232, where the separator body 231 has a head end a and a tail end b in length direction F1 and is constructed to be capable of winding in the length direction F1 to form the separator roll 2000 with the tail end b as a roll core, and the warning coating 232 is provided on the separator body 231 and is configured to be spaced from the tail end b by a first preset length L1.

The separator body 231 includes a base film and/or a coating provided on at least one surface of the base film. The coating includes inorganic particles, organic particles, or organic-inorganic hybrid particles. The separator body 231 is provided between the negative electrode plate and the positive electrode plate in the electrode assembly 23 for separation. The base film may be made of PP, PE, or PI material, or other materials. The separator body 231 features electron insulation to guarantee mechanical separation of the negative electrode plate from the positive electrode plate, and the base film has a specific pore size and porosity to guarantee low resistance and high ionic conductivity.

The length direction F1 refers to direction F1 indicated by the arrow in FIG. 6 to FIG. 8. The separator body 231 has a head end a and a tail end b formed at opposite ends in the length direction F1. When the separator body 231 is wound along the length direction F1 of the separator body 231 to form the separator roll 2000 shown in FIG. 4 and FIG. 5, the winding direction F1 is transformed from the length direction F1. After the winding is completed, the head end a of the separator body 231 is located at a more outward position and the tail end b of the separator body 231 is located at a more inward position to form the roll core. When the separator body 231 is peeled off from the separator roll 2000, the head end a is pulled and peeled off from the separator roll 2000 first, and then the tail end b is peeled off from the separator roll 2000. In this way, the entire separator body 231 is peeled off completely.

A warning coating 232, a structure used for providing a warning in advance for the tail end b of the separator body 231 on which the warning coating 232 is located, is provided on the separator body 231 and can be identified by an external detection apparatus. The warning coating 232 can be formed on the surface of the separator body 231 by methods such as laying or pasting. Upon identifying the warning coating 232, the detection apparatus transmits a signal to a downstream apparatus, indicating that at that point, there is still a first preset length L1 away from the tail end b of the separator body 231 and prompting the downstream apparatus to perform operations such as cutting, thereby providing a warning for the position of the tail end b of the separator body 231.

The first preset length L1 is the length L1 indicated in FIG. 6 to FIG. 8, and a distance of the first preset length L1 can be set depending on lengths of the positive electrode plate and the negative electrode plate that are wound together with the separator body 231, and this is not limited in this application. With the distance of the first preset length L1 controlled, sufficient time is left for the downstream apparatus to operate to avoid a lack of separator body in the high-speed winding process of the electrode assembly 23 caused by insufficient length of the tail end b, or a non-separator body 231 structure connected to the tail end b being directly wound into the electrode assembly 23.

In this way, the warning coating 232 provides a warning in advance for the position of the tail end b of the separator body 231 on which the warning coating 232 is located. When the warning coating 232 is detected, it indicates that at that point, there is still a first preset length L1 away from the tail end b of the separator body 231, so that the position of the tail end b of the separator body 231 is predicted in advance and adjustment can be performed accordingly, to avoid a lack of separator body caused by insufficient length of the tail end b, or a non-separator body 231 structure connected to the tail end b being directly wound into the electrode assembly 23, thereby guaranteeing the quality of the electrode assembly 23.

It can be understood that the warning coating 232 can be wound into the inside of the electrode assembly 23 without causing damage to the structure of the electrode assembly 23 or participating in electrochemical reactions of the battery 100.

The separator roll 2000 may include one or more separator bodies 231. When the separator roll 2000 includes one separator body 231, its tail end b forms a roll core, and its head end a is located at the outermost layer of the separator roll 2000. In the peeling process, the head end a is pulled and peeled off from the separator roll 2000 first. After the external detection apparatus identifies a warning coating 232, indicating that this separator roll 2000 has only a distance of the first preset length L1 left, and adjustment can be made promptly to avoid a lack of separator body caused by insufficient remaining roll length.

Further, the range of values for the first preset length L1 is 0.1 millimeter (mm) to 5000 mm, preferably 1-300 mm. It should be noted that the first preset length L1 needs to be longer than the length of the separator between the negative electrode plate and the positive electrode plate in one electrode assembly 23. This ensures that after the warning coating 232 is detected, a length is still sufficient for winding for one electrode assembly 23, thereby avoiding a lack of separator body caused by insufficient remaining roll length.

In some embodiments, the separator roll 2000 includes a plurality of separator bodies 231, every two adjacent separator bodies 231 being connected head-to-tail by a connecting member 30, with a tail end b of the separator body 231 in the innermost layer forming the roll core.

The connecting member 30, a structure for connecting the tail end b and the head end a for the two adjacent separator bodies 231, is originally provided to facilitate connection of the plurality of separator bodies 231 to form a separator roll 2000 for storage or subsequent use. The connecting member 30 is not part of the electrode assembly 23 and should not be wound into the electrode assembly 23. Conventionally, the connecting member 30 is made of an insulating material and may connect the tail end b and the head end a for two adjacent separator bodies 231 by fixed connection, adhesive connection, or the like.

A tail end b of a separator body 231 at the first layer is wound for forming a roll core, and then a tail end b of a separator body 231 at the second layer is connected with the head end a of the separator body 232 at the first layer via a connecting member 30 and wound, followed by the winding of the third layer, the fourth layer, and so on.

In addition, a support member 40 may be arranged, and the plurality of separator bodies 231 are connected head-to-tail in sequence and wound to the periphery of the support member 40, thereby forming a quasi-cylindrical separator roll 2000. Alternatively, the support member 40 may not be arranged, and the plurality of separator bodies 231 are stacked and wound to accommodate more separator bodies 231 on a same separator roll 2000.

In this way, with arrangement of the connecting members 30, the plurality of separator bodies 231 can be wound on a single separator roll 2000. In this case, with arrangement of the warning coating 232, a specific position of a connecting member 30 can be obtained to avoid a phenomenon that the connecting member 30 between a separator body 231 and another separator body 231 is wound into the electrode assembly 23 in the high-speed winding process of the electrode assembly 23 to form an unacceptable electrode assembly 23.

In some embodiments, for example, the connecting member 30 includes a splicing adhesive formed by mixing one or more of polyethylene terephthalate, epoxy resin, polyurethane, unsaturated polyester resin, phenolic resin, polyacrylic resin, polyvinyl chloride resin, polysulfide rubber, silicone rubber, polyurethane rubber, neoprene rubber, and butyl rubber. The splicing adhesive can bond a head end a and a tail end b for two adjacent separator bodies 231.

Polyethylene terephthalate is a common resin material, and the splicing adhesive formed therefrom has excellent physical and mechanical properties, frictional resistance, dimensional stability, and electrical insulation and can connect adjacent separator bodies 231.

When it is necessary to wind a plurality of separator bodies 231 onto a separator roll 2000, the splicing adhesive is applied at connection positions of every two separator bodies 231 so that the plurality of separator bodies 231 are connected and wound to form a separator roll 2000. When the separator body 231 needs to be peeled off from the separator roll 2000, the warning coating 232 is used for providing a warning in advance for the position of the splicing adhesive, prompting a downstream apparatus to perform processing such as cutting on the tail end b of the separator body 231 to prevent the splicing adhesive from being wound with the separator body 231 into the electrode assembly 23 and thereby affecting the production quality of the electrode assembly.

In some embodiments, a warning coating 232 is provided on each of the separator bodies 231.

The warning coating 232 is used for providing a position warning for the tail end b of the separator body 231 on which the warning coating is located, to avoid a lack of separator body 231 caused by insufficient length of its tail end b in the high-speed winding process of the electrode assembly 23, and to guarantee position warning for the tail end b of each separator body 231 in the separator roll 2000, so that the warning is effectively provided for the tail end of each separator body 231 in the process of peeling off the separator body 231.

In some embodiments, the warning coating 232 is applied on at least one surface of the separator body 231 and the warning coating 232 extends along the length direction F1 and/or the width direction F2 of the separator body 231.

The width direction F2 of the separator body 231 refers to the direction F2 indicated by the arrow in FIG. 6 to FIG. 8, and the length direction F1 and the width direction F2 of the separator body 231 are perpendicular such that the warning coating 232 has sufficient dimensions in the width direction F2 and/or the length direction F1 of the separator body 231 to guarantee that the warning coating 232 can be detected by an external setting.

Two surfaces are formed on two sides of the separator body 231 facing away from each other, and the warning coating 232 can be applied on one surface or two surfaces.

Direct application of the warning coating 232 onto the surface of the separator body 231 allows for the simple and quick formation of the warning coating 232 that can be detected by an external detection apparatus without causing damage to the surface of the separator body 231. Alternatively, grooves or bumps can be formed on the surface of the separator body 231, and in some illustrative embodiments, the warning coating 232 can be formed on the groove wall or bump surface to ensure that the warning coating 232 can be directly and quickly identified by an external detection apparatus in the process of peeling off the separator body 231. This is not limited in this application.

In some embodiments, the warning coating 232 has a second preset length L2 in the length direction F1 of the separator body 231, the second preset length L2 being in the range of 1-1000 mm.

It can be understood that the separator roll 2000 is formed through winding along the length direction F1 of the separator body 231, and consequently, the separator body 231 is also peeled off from the separator roll 2000 in the length direction F1 of the separator body 231. The external detection apparatus is arranged on the peeling path of the separator body 231 to guarantee the second preset length L2 of the warning coating 232, so that a sufficient detection distance is provided when the warning coating 232 passes by the external detection apparatus. This ensures effective detection of the warning coating 232.

In some embodiments, the second preset length L2 is in the range of 10-50 mm.

In this way, the second preset length L2 is controlled in the range of 10-50 mm to guarantee the effective detection of the warning coating 232 by the external detection apparatus and to avoid the second preset length L2 being too long.

In some illustrative embodiments, the warning coating 232 may extend along the width direction F2 of the separator body 231 to two sides of the separator body 231 in the width direction F2, or the warning coating 232 may be provided in the middle of the separator body 231 without extending to the two sides.

In some embodiments, at least one side edge of the warning coating 232 coincides with an edge of the separator body 231 in the width direction F2 of the separator body 231.

In this embodiment, the following three cases are included: In the width direction F2 of the separator body 231, the left edge of the warning coating 232 coincides with an edge of the separator body 231; the right edge of the warning coating 232 coincides with an edge of the separator body 231; and two side edges of the warning coating 232 coincide with two side edges of the separator body 231.

When the two side edges of the warning coating 232 coincide with the two side edges of the separator body 231 in the width direction F2 of the separator body 231, the warning coating 232 only needs to be arranged in the width direction F2 of the separator body 231. This simplifies the production process and enables the warning coating 232 to be identified by the detection apparatus.

In some embodiments, state identification of the tabs is also included in the production process of the electrode assembly. Specifically, whether the tabs are folded can be identified through a folding sensor.

When the left edge of the warning coating 232 coincides with an edge of the separator body 231 or the right edge of the warning coating 232 coincides with an edge of the separator body 231 in the width direction F2 of the separator body 231, the side of the warning coating 232 that does not coincide with an edge of the separator body 231 can be distinguished in position from a tab on that side, to prevent misjudgment when the warning coating 232 passes by a sensor for tab identification, that is, a phenomenon that the sensor senses the warning coating 232 and misidentifies it as a tab.

It can be understood that the foregoing embodiments are illustrated in a state that the separator roll is placed vertically along the winding direction, but the separator roll may be placed in other ways in practical applications.

In some embodiments, the two side edges of the warning coating 232 do not coincide with the two side edges of the separator body 231 in the width direction F2 of the separator body 231.

It can be understood that the warning coating 232 running through the entire separator body 231 causes a tab folding sensor that senses the tabs on two sides of the separator body 231 in the width direction F2 during winding to falsely report tab folding when detecting the warning coating 232. Therefore, the warning coating 232 is arranged in the middle of the separator body 231 without extending to two ends of the separator body 231 in the width direction F2 to make it distinguishable in position from the tabs located at two ends of the separator body 231 in the width direction F2. This can further prevent misjudgment when the warning coating 232 passes by the sensor for tab identification, that is, a phenomenon that the sensor senses the warning coating 232 and misidentifies it as a tab. In this way, false alarms are reduced during production of the electrode assembly, improving production efficiency.

In some embodiments, in the width direction F2 of the separator body 231, distances between the two side edges of the warning coating 232 and the two side edges of the separator body 231 are in the range of 1-1000 mm.

The distances between the two side edges of the warning coating 232 and the two side edges of the separator body 231 may be equal, and in this case, the warning coating 232 is located in the middle of the separator body 231 in the width direction F2. Alternatively, the distances between the two side edges of the warning coating 232 and the two side edges of the separator body 231 may be unequal, and in this case, the warning coating 232 is predominantly positioned on a side of the separator body 231 in the width direction F2.

In some embodiments, in the width direction F2 of the separator body 231, distances between the two side edges of the warning coating 232 and the two side edges of the separator body 231 are in the range of 5-30 mm.

The range of 5-30 mm can guarantee effective detection of the warning coating 232 by the external detection apparatus, and can avoid the mutual influence between the warning coating 232 and a tab.

The distances between the two side edges of the warning coating 232 and the two side edges of the separator body 231 should also be determined based on the dimension of the separator body 231 in its width direction F2. It can be understood that the distances between the two side edges of the warning coating 232 and the two side edges of the separator body 231 must be smaller than the dimension of the separator body 231 in its width direction F2.

The warning coating 232 is formed by a pigment, an adhesive, or a coating of mixtures and provided on the surface of the separator body 231, and has properties clearly distinguishable from those of the separator body 231, such as hue, brightness, chroma, glossiness, and color difference on the surfaces of the two, allowing the warning coating 232 to be accurately and easily detected by an external detection apparatus.

In some embodiments, the warning coating 232 includes a mixture of at least one or more of rubber, polyacrylic acid, polymethacrylic acid, methyl polyacrylate, ethyl acrylate, pure acrylic emulsion, polyacrylic acid-styrene copolymer, polyvinylpyrrolidone, styrene-butadiene rubber, epoxy resin, neopentyl glycol diacrylate, sodium polyacrylate series, and fluorine-containing polyolefins.

The fluorine-containing polyolefin binder may include but is not limited to adhesives made from polyvinylidene fluoride (PVDF), vinylidene fluoride copolymer, or their modified (for example, modified by carboxylic acid, acrylic acid, or acrylonitrile) derivatives.

The adhesive is applied onto the surface of the separator body 231 to quickly form the warning coating 232. In some illustrative embodiments, a 5# adhesive made of natural rubber, with a faster setting time and higher bonding strength, may alternatively be used.

In some embodiments, the RGB difference between the separator body 231 and the warning coating 232 is (a, b, c), where 20 ≤ a ≤ 225, 20 ≤ b ≤ 225, and 20 ≤ c ≤ 225.

It can be understood that a, b, and c within the foregoing ranges can create a noticeable color difference between the separator body 231 and the warning coating 232. In the chromatic system, color has three basic characteristics: hue, purity (also referred to as chroma or saturation), and brightness, also known in color science as the three elements of color or the three attributes of color. A color with a saturation of 0 is an achromatic color. For example, a warning coating 232 having a color difference with the separator body 231 is applied onto the separator body 231, so that the separator body 231 and the warning coating 232 have different colors, allowing the warning coating 232 to play the role of warning.

a, b, and c in the RGB color difference value between the separator body 231 and the warning coating 232 are in the range of 1-225, to guarantee that the warning coating 232 is clearly distinguishable from the separator body 231 in color and therefore can be identified to produce a warning effect.

In a specific embodiment, the surface of the separator body 231 may be controlled to be white, and RGB values of the color of the warning coating 232 are set to have a lower limit of (1, 176, 241) and an upper limit of (25, 38, 213).

In other embodiments, the surface of the separator body 231 may alternatively be set to any color and the surface of the warning coating 232 may be set to a color different from the color of the surface of the separator body 231, which is not limited in this application.

In some embodiments, the RGB color difference value between the separator body 231 and the warning coating 232 is (a, b, c), where 20 ≤ a ≤ 220, 20 ≤ b ≤ 220, and 20 ≤ c ≤ 220.

Within this range, the warning coating 232 is clearly distinguishable from the separator body 231 in color.

In some embodiments, the shape of the warning coating 232 is a rectangle, circle, semicircle, trapezoid, or triangle, and this is not limited in this application.

The rectangle, circle, semicircle, trapezoid, or triangle is capable of forming extensions in at least two directions, so as to ensure that the warning coating 232 has a second preset length L2 in the length direction F1 of the separator body 231 and extends along the width direction F2 towards two sides of the separator body 231.

In this way, the warning coating 232 can be arranged in different shapes, making the warning coating 232 easy to process and capable of achieving the role of warning.

In some embodiments, thickness of the warning coating 232 is less than or equal to 2 µm. Optionally, the thickness of the warning coating 232 is less than or equal to 1.5 µm. Optionally, the thickness of the warning coating 232 is less than or equal to 1.2 µm. Optionally, the thickness of the warning coating 232 is less than or equal to 1 µm. Optionally, the thickness of the warning coating 232 is less than or equal to 0.8 µm. Optionally, the thickness of the warning coating 232 is less than or equal to 0.5 µm.

In some embodiments, air permeability of the warning coating 232 is less than or equal to 50 s/100 mL. Optionally, the air permeability of the warning coating 232 is less than or equal to 40 s/100 mL. Optionally, the air permeability of the warning coating 232 is less than or equal to 30 s/100 mL. Optionally, the air permeability of the warning coating 232 is less than or equal to 20 s/100 mL. Optionally, the air permeability of the warning coating 232 is less than or equal to 10 s/100 mL.

The warning coating 232 is prepared from a slurry. The slurry includes the following raw materials in parts by mass: 1-40 parts of binder, 5-50 parts of pigment, and 30-95 parts of solvent. As a choice, the parts by mass of the binder may be 3 parts, 5 parts, 8 parts, 10 parts, 15 parts, 20 parts, 25 parts, 30 parts, 35 parts, 40 parts, or the like. As a choice, the parts by mass of the pigment may be 5 parts, 8 parts, 10 parts, 15 parts, 20 parts, 25 parts, 30 parts, 40 parts, 50 parts, or the like. As a choice, the parts by mass of the solvent may be 30 parts, 40 parts, 50 parts, 60 parts, 70 parts, 80 parts, 90 parts, or the like.

Optionally, the slurry for preparing the warning coating 232 further includes 1-30 parts by mass of an additive. Optionally, the additive includes one or more of driers, tougheners, emulsifiers, thickeners, pigment dispersants, defoamers, leveling agents, mold inhibitors, and antistatic agents. Optionally, as a choice, the parts by mass of the additive may be 3 parts, 5 parts, 8 parts, 10 parts, 15 parts, 20 parts, 25 parts, 30 parts, or the like.

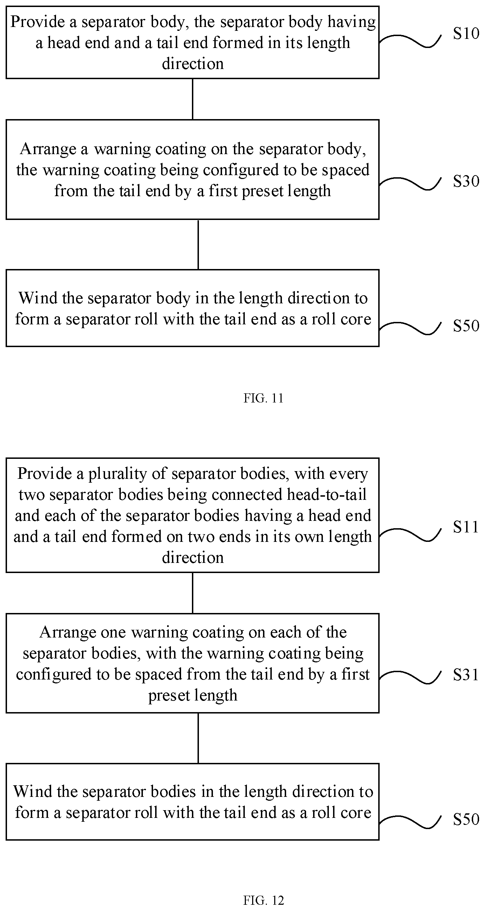

According to another aspect of this application, a preparation method of separator roll is further provided. Referring to FIG. 11, the preparation method specifically includes:
S10. providing a separator body 231, the separator body 231 having a head end a and a tail end b formed in its length direction F1;
S30. arranging a warning coating 232 on the separator body 231, the warning coating 232 being configured to be spaced from the tail end b by a first preset length L1; and
S50. winding the separator bodies 231 in the length direction F1 to form a separator roll 2000 with the tail end b as a roll core.

The terms involved in the above and the following methods has been explained in the above and will not be repeated below.

In this way, the warning coating 232 provides a warning in advance for the position of the tail end b of the separator body 231 on which the warning coating 232 is located. When the warning coating 232 is detected, it indicates that at that point, there is still a first preset length L1 away from the tail end b of the separator body 231, so that the position of the tail end b of the separator body 231 is predicted in advance and adjustment can be performed accordingly, to avoid a lack of separator body caused by insufficient length of the tail end b or a non-separator body 231 structure connected to the tail end b being directly wound into the electrode assembly 23, thereby guaranteeing the quality of the electrode assembly 23.

In some embodiments, referring to FIG. 12, the providing a separator body 231 specifically includes:
S11. providing a plurality of separator bodies 231, with every two separator bodies 231 being connected head-to-tail.

In this way, the plurality of separator bodies 231 can be wound on a single separator roll 2000. Implementation of continuous winding and continuous peel-off of the separator bodies 231 improves production efficiency.

It can be understood the quantity of the separator bodies 231 forming the separator roll 2000 may alternatively be one. In a case that the separator roll 2000 includes one separator body 231, it is not necessary to connect the separator bodies 231 head-to-tail, and its tail end b forms a roll core, and its head end a is located at the outermost layer of the separator roll 2000 after winding. In the peeling process, the head end a is pulled and peeled off from the separator roll 2000 first. After the external detection apparatus identifies a warning coating 232, indicating that this separator roll 2000 has only a distance of the first preset length L1 left, adjustment can be made promptly to avoid a lack of separator body caused by insufficient remaining roll length.

In some embodiments, referring to FIG. 12, the arranging a warning coating 232 on the separator body 231 specifically includes:

S31. arranging one warning coating 232 on each of the separator bodies 231.

The warning coating 232 is used for providing a position warning for the tail end b of the separator body 231 on which the warning coating is located, to avoid a lack of separator body 231 caused by insufficient length of its tail end b in the high-speed winding process of the electrode assembly 23, and to guarantee position warning for the tail end b of each separator body 231 in the separator roll 2000, so that the warning is effectively provided for the tail end of each separator body 231 in the process of peeling off the separator body 231.

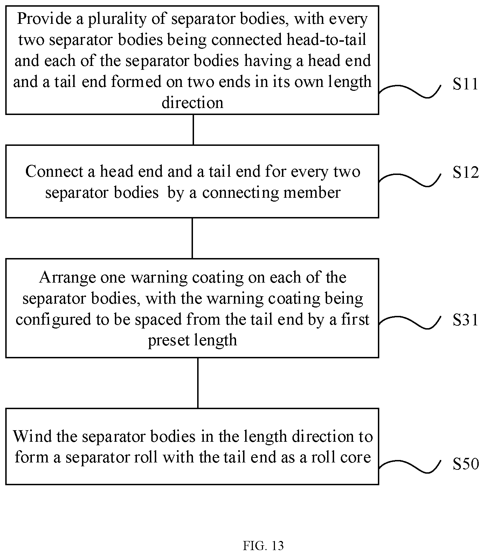

In some embodiments, referring to FIG. 13, the two separator bodies 231 being connected head-to-tail further includes:
S12. connecting a head end a and a tail end b for every two separator bodies 231 by a connecting member 30.

With arrangement of the connecting members 30, the plurality of separator bodies 231 can be wound on a single separator roll 2000. In this case, with arrangement of the warning coating 232, a specific position of a connecting member 30 can be obtained to avoid a phenomenon that the connecting member 30 between a separator body 231 and another separator body 231 is wound into the electrode assembly 23 in the high-speed winding process of the electrode assembly 23 to form an unacceptable electrode assembly 23.

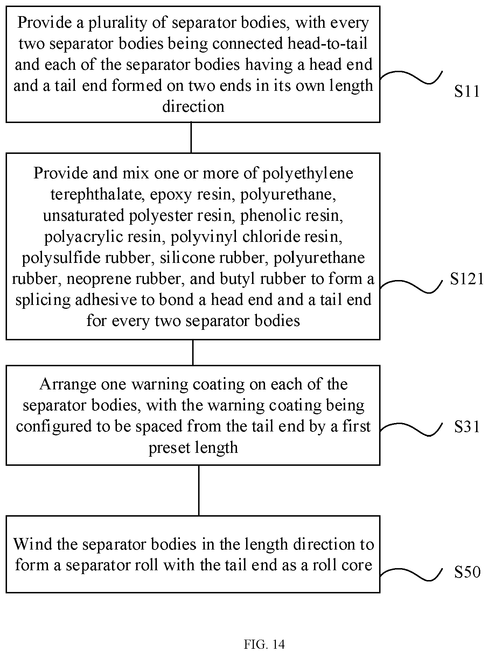

In some embodiments, referring to FIG. 14, the connecting a head end a and a tail end b for every two separator bodies 231 by a connecting member 30 specifically includes:

S121. providing and mixing one or more of polyethylene terephthalate, epoxy resin, polyurethane, unsaturated polyester resin, phenolic resin, polyacrylic resin, polyvinyl chloride resin, polysulfide rubber, silicone rubber, polyurethane rubber, neoprene rubber, and butyl rubber to form a splicing adhesive to bond a head end a and a tail end b for every two separator bodies 231.

When it is necessary to wind a plurality of separator bodies 231 onto a separator roll 2000, the tail end b of a separator body 231 at the first layer is wound for forming a roll core, and then the tail end b of a separator body 231 at the second layer is connected with the head end a of the separator body 232 at the first layer via a connecting member 30 and wound, followed by the winding of the third layer, the fourth layer, and so on. The splicing adhesive is applied at connection positions of every two separator bodies 231 so that the plurality of separator bodies 231 are connected and wound to form the separator roll 2000.

When the separator body 231 needs to be peeled off from the separator roll 2000, the warning coating 232 is used for providing a warning in advance for the position of the splicing adhesive, prompting an operator to process the splicing adhesive to prevent the splicing adhesive from being wound with the separator body 231 into the electrode assembly 23 and thereby affecting the product yield rate of the electrode assembly.

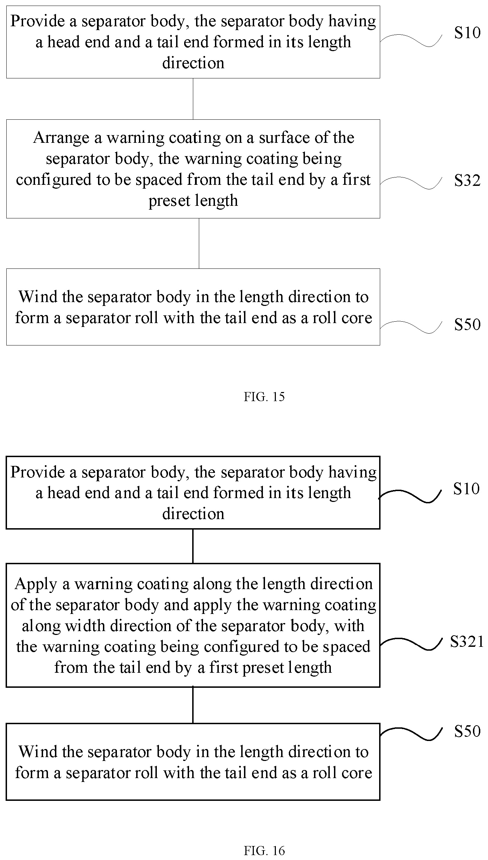

In some embodiments, referring to FIG. 15, the arranging a warning coating 232 on the separator body 231 further includes:

S32. applying a warning coating 232 onto at least one surface of the separator body 231.

Two surfaces are formed on two sides of the separator body 231 facing away from each other, and the warning coating 232 can be applied on one surface or two surfaces. In this way, the warning coating 232 can be formed simply and quickly, and can be detected by an external detection apparatus without causing damage to the surface of the separator body 231.

Alternatively, grooves or bumps can be formed on the surface of the separator body 231, and in some illustrative embodiments, the warning coating 232 can be formed on the groove wall or bump surface to ensure that the warning coating 232 can be directly and quickly identified by an external detection apparatus in the process of peeling off the separator body 231.

In some embodiments, referring to FIG. 16, the arranging a warning coating 232 on a surface of the separator body 231 further includes:
S321. applying the warning coating 232 along the length direction F1 of the separator body 231 and applying the warning coating 232 along the width direction F2 of the separator body 231.

In this way, the warning coating 232 has sufficient dimensions in the width direction F2 and/or the length direction F1 of the separator body 231 to guarantee that the warning coating 232 can be detected by an external detection apparatus.

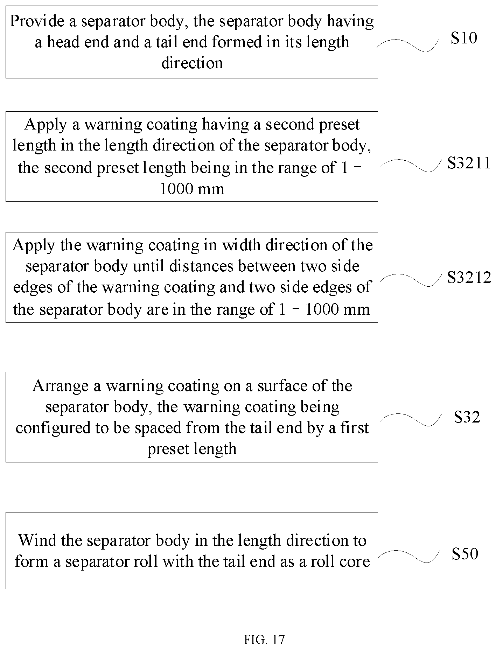

In some embodiments, referring to FIG. 17, the applying the warning coating 232 along the length direction F1 of the separator body 231 further includes:

S3211. applying the warning coating 232 having a second preset length L2 in the length direction F1 of the separator body 231, the second preset length L2 being in the range of 1-1000 mm.

It can be understood that the separator roll 2000 is formed through winding along the length direction F1 of the separator body 231, and consequently, the separator body 231 is also peeled off from the separator roll 2000 in the length direction F1 of the separator body 231. The external detection apparatus is arranged on the peeling path of the separator body 231 to guarantee the second preset length L2 of the warning coating 232, so that a sufficient detection distance is provided when the warning coating 232 passes by the external detection apparatus. This ensures effective detection of the warning coating 232..

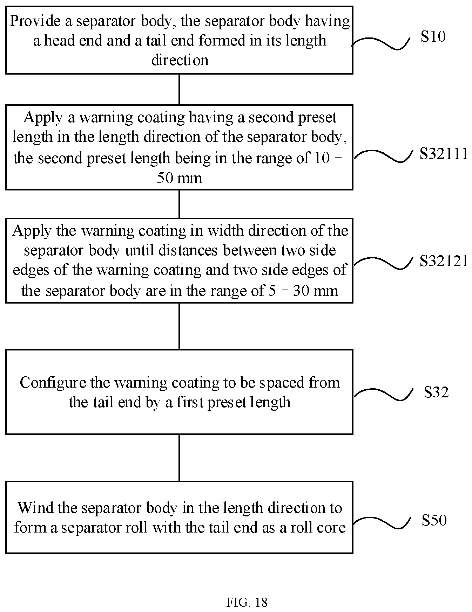

In some embodiments, referring to FIG. 18, the applying the warning coating 232 along the length direction F1 of the separator body 231 further includes:

S32111. applying the warning coating 232 having a second preset length L2 in the length direction F1 of the separator body 231, the second preset length L2 being in the range of 10-50 mm.

In this way, the second preset length L2 being controlled in the range of 10-50 mm allows for a sufficient detection distance when the warning coating 232 passes by the external detection apparatus, thereby guaranteeing effective detection of the warning coating 232.

In some embodiments, referring to FIG. 17, the applying the warning coating 232 along the width direction F2 of the separator body 231 further includes:
S3212. applying the warning coating 232 in the width direction F2 of the separator body 231 until distances between two side edges of the warning coating 232 and two side edges of the separator body 231 are in the range of 1-1000 mm.

The distances between the two side edges of the warning coating 232 and the two side edges of the separator body 231 may be equal, and in this case, the warning coating 232 is located in the middle of the separator body 231 in the width direction F2. Alternatively, the distances between the two side edges of the warning coating 232 and the two side edges of the separator body 231 may be unequal, and in this case, the warning coating 232 is predominantly positioned on a side of the separator body 231 in the width direction F2.

In some embodiments, referring to FIG. 18, the applying the warning coating 232 along the width direction F2 of the separator body 231 further includes:
S32121. applying the warning coating 232 in the width direction F2 of the separator body 231 until distances between two side edges of the warning coating 232 and two side edges of the separator body 231 are in the range of 5-30 mm.

The range of 5-30 mm can guarantee effective detection of the warning coating 232 by the external detection apparatus, and can avoid the mutual influence between the warning coating 232 and a tab.

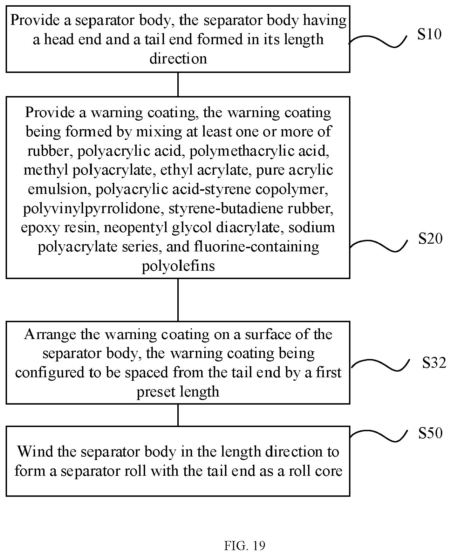

In some embodiments, referring to FIG. 19, before the arranging a warning coating 232 on a surface of the separator body 231, the preparation method of separator roll further includes:
S20. providing a warning coating 232, the warning coating 232 being formed by mixing at least one or more of rubber, polyacrylic acid, polymethacrylic acid, methyl polyacrylate, ethyl acrylate, pure acrylic emulsion, polyacrylic acid-styrene copolymer, polyvinylpyrrolidone, styrene-butadiene rubber, epoxy resin, neopentyl glycol diacrylate, sodium polyacrylate series, and fluorine-containing polyolefins.

The fluorine-containing polyolefin binder may include but is not limited to adhesives made from polyvinylidene fluoride (PVDF), vinylidene fluoride copolymer, or their modified (for example, modified by carboxylic acid, acrylic acid, or acrylonitrile) derivatives.

In this way, the warning coating 232 can be quickly formed on the surface of the separator body 231. In some illustrative embodiments, a 5# adhesive made of natural rubber, with a faster setting time and higher bonding strength, may alternatively be used.

In some embodiments, the separator body 231 is different from the warning coating 232 in color.

In the chromatic system, color has three basic characteristics: hue, purity (also referred to as chroma or saturation), and brightness, also known in color science as the three elements of color or the three attributes of color. A color with a saturation of 0 is an achromatic color. For example, a warning coating 232 having a color difference with the separator body 231 is applied onto the separator body 231, so that the separator body 231 and the warning coating 232 have different colors, allowing the warning coating 232 to play the role of warning.

In some embodiments, the separator body 231 is different from the warning coating 232 in color.

The RGB color difference value between the separator body 231 and the warning coating 232 is (a, b, c), where 20 ≤ a ≤ 225, 20 ≤ b ≤ 225, and 20 ≤ c ≤ 225, to guarantee that the warning coating 232 is clearly distinguishable from the separator body 231 in color and therefore can be identified to produce a warning effect.

In a specific embodiment, the surface of the separator body 231 can be controlled to be white, and RGB values of the color of the warning coating 232 are set to have a lower limit of (1, 176, 241) and an upper limit of (25, 38, 213).

In other embodiments, the surface of the separator body 231 may alternatively be set to any color and the surface of the warning coating 232 may be set to a color different from the color of the surface of the separator body 231, which is not limited in this application.

In some embodiments, the RGB color difference values between the separator body 231 and the warning coating 232 are as follows: 20 ≤ a ≤ 225, 20 ≤ b ≤ 225, and 20 ≤ c ≤ 225.

Within this range, the warning coating 232 is clearly distinguishable from the separator body 231 in color.

In the foregoing embodiments, the manner of arranging the warning coating 232 on the separator body 231 to provide a warning in advance for the tail end b of the separator body 231 is equally applicable to the positive electrode plate and the negative electrode plate. Details are not repeated in this application.

This application further provides a manufacturing method of electrode assembly, including the following steps: providing roll materials, the roll materials including a positive electrode plate roll, a separator roll, and a negative electrode plate roll, where at least one of the positive electrode plate roll, the separator roll, and the negative electrode plate roll is provided with a warning coating; stacking and winding a positive electrode plate in the positive electrode plate roll, a separator body in the separator roll, and a negative electrode plate in the negative electrode plate roll; and in the winding process, detecting whether the warning coating is provided on at least one of the positive electrode plate roll, the separator roll, and the negative electrode plate roll.

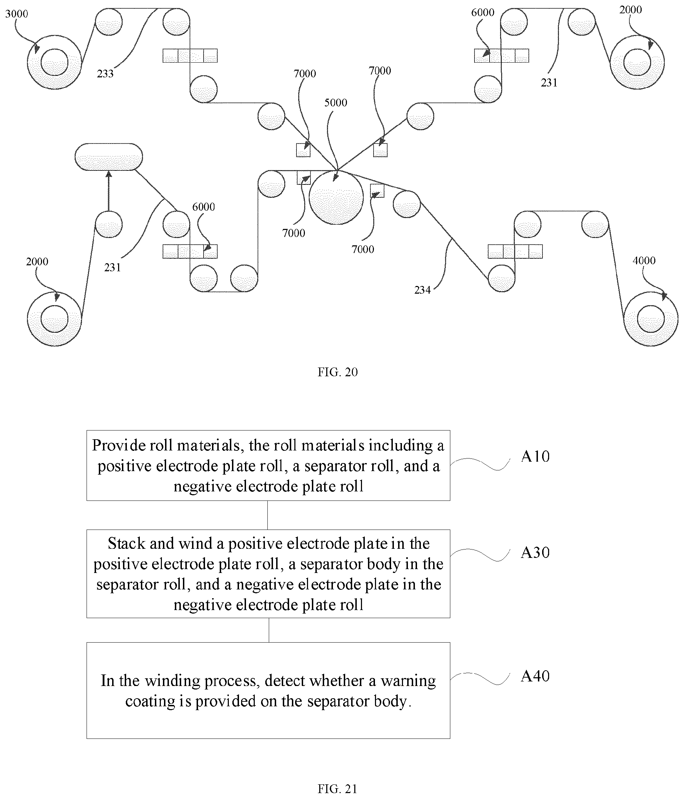

According to some embodiments of this application, referring to FIG. 20, this application further provides a manufacturing method of electrode assembly. Referring to FIG. 21, the manufacturing method of electrode assembly specifically includes:
A10. providing roll materials, the roll materials including a positive electrode plate roll 4000, the separator roll 2000 in any one of the foregoing embodiments, and a negative electrode plate roll 3000, where the separator roll 2000 includes a separator body 231 and a warning coating 232 provided on the separator body 231, the separator roll 2000 has a head end a and a tail end b formed on two ends in its own winding direction F1, the tail end b is a roll core of the separator roll 2000, and the warning coating 232 is configured to be spaced from the tail end b by a first preset length L1;
A30. stacking and winding a positive electrode plate 234 in the positive electrode plate roll 4000, a separator body 231 in the separator roll 2000, and a negative electrode plate 233 in the negative electrode plate roll 3000; and
A40. in the winding process, detecting whether the warning coating 232 is provided on the separator body 231.

Specifically, a winding apparatus 5000 is disposed to stack and wind the positive electrode plate 234 in the positive electrode plate roll 4000, the separator body 231 in the separator roll 2000, and the negative electrode plate 233 in the negative electrode plate roll 3000 onto the winding apparatus 5000, and electrode assemblies 23 are prepared through winding.

The winding apparatus 5000 has a traction structure and a winding structure. The traction structure can connect a head end a of the positive electrode plate roll 4000, a head end a of the separator roll 2000, and a head end a of the negative electrode plate roll 3000 to the winding structure, and then the winding structure is controlled to rotate at a high speed in a specified circumferential direction to peel off the positive electrode plate 234, the separator body 231, and the negative electrode plate 233 from the positive electrode plate roll 4000, the separator roll 2000, and the negative electrode plate roll 3000, respectively. In this way, the electrode assemblies 23 are formed through winding on the winding structure.

In some embodiments, the positive electrode plate in the positive electrode plate roll includes a positive electrode plate body and a warning coating provided on the positive electrode plate body, and whether the warning coating is provided on the positive electrode plate body is detected in the winding process.

In some embodiments, the negative electrode plate in the negative electrode plate roll includes a negative electrode plate body and a warning coating provided on the negative electrode plate body, and whether the warning coating is provided on the positiveelectrode plate body is detected in the winding process.

The manufacturing method of electrode assembly includes the preparation method of separator roll in any one of the foregoing embodiments, and has all its functions and effects. Details are not repeated in this application.

The winding direction F1 refers to a length direction F1 of a separator roll 2000 formed after the completion of winding separator bodies 231 along the length direction F1 thereof.

The positive electrode plate roll 4000 and the negative electrode plate roll 3000 refer to material structures formed by stacking and winding at least one positive electrode plate 234 and at least one negative electrode plate 233, respectively, in the same way as that for the separator roll 2000. After the positive electrode plates 234 and the negative electrode plates 233 are manufactured from the production line, the material structures are wound into roll shapes, thereby facilitating the subsequent preparation of the electrode assemblies 23.

The detection apparatus 6000 is an apparatus for detecting the warning coating 232 on the separator body 231. The warning coating 232 is configured to be spaced from the tail end b of the separator body 231 by a first preset length L1. When the warning coating 232 is detected, it indicates that there is still a first preset length L1 to the tail end b of the separator body 231 at that point, and the high-speed rotation state of the winding mechanism can be changed or other operations can be performed at that moment.

In this way, detection of the warning coating 232 by a detection assembly allows to provide a warning in advance for the tail end b of the separator body 231, so as to avoid a lack of separator body caused by insufficient length of the tail end b or a non-separator body 231 structure connected to the tail end b being directly wound into the electrode assembly 23, so that the quality of the electrode assembly 23 can be guaranteed.

Specifically, the detection apparatus 600 may be an apparatus capable of detecting different colors, different refractive indexes, and different materials, can effectively and obviously distinguish the warning coating 232 from the separator body 231, and specific arrangement of the apparatus needs to match specific set material properties of the warning coating 232.

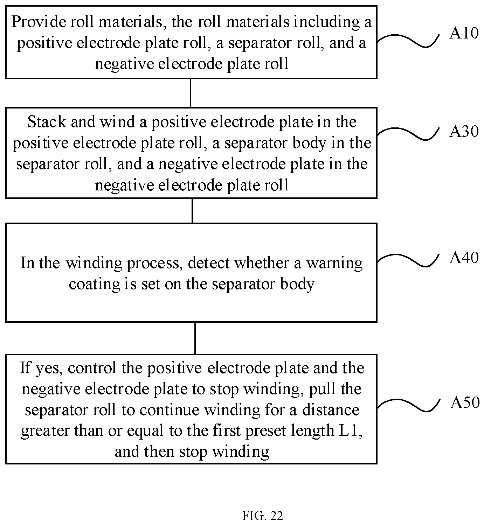

In some embodiments, referring to FIG. 22, optionally, after the detecting whether the warning coating 232 is provided on the separator body 231, the manufacturing method of electrode assembly further includes:
A50. if yes, controlling the positive electrode plate 234 and the negative electrode plate 233 to stop winding, pulling the separator roll 2000 to continue winding for a distance greater than or equal to the first preset length L1, and then stopping winding.

The positive electrode plate 234 and the negative electrode plate 233 are not involved in the winding process. The separator body 231 is wound individually, and the winding stops after a winding distance is greater than or equal to the specified first preset length L1, and at that point, a tail end b of a separator body 231 on the separator roll 2000 separates from the separator roll 2000. In this case, if there are still separator bodies 231 on the separator roll 2000, a connecting member 30 between two separator bodies 231 has been peeled off from the separator roll 2000 and has not been wound into between the positive electrode plate 234 and the negative electrode plate 233, thereby avoiding a phenomenon that the connecting member 30 is wound into the electrode assembly 23.

In this case, if there is no other separator body 231 on the separator roll 2000, the positive electrode plate 234 and the negative electrode plate 233 are not involved in the winding process in advance, and the separator body 231 is wound individually, avoiding the situation that the electrode assembly 23 is scrapped due to a lack of separator body 231 caused by the length of the separator body 231 being insufficient to wind into an electrode assembly 23, and improving the yield.

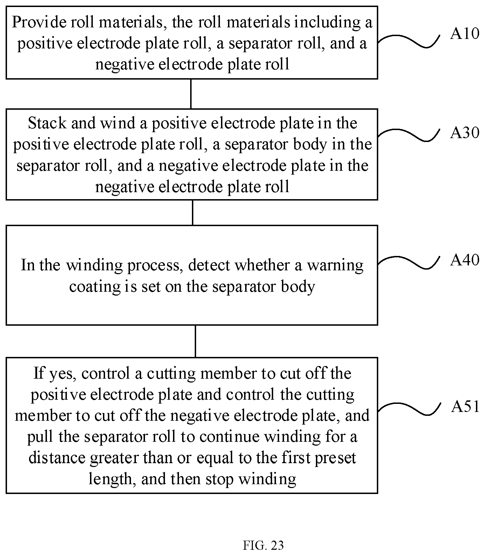

In some embodiments, optionally, referring to FIG. 23, the controlling the positive electrode plate 234 and the negative electrode plate 233 to stop winding specifically includes:
A51. controlling a cutting member 7000 to cut off the positive electrode plate 234 and controlling the cutting member 7000 to cut off the negative electrode plate 233.

The cutting member 7000 is a blade, a rolling roller, or another type of structure for cutting and causes no damage to the structure of the positive electrode plate 234, the negative electrode plate 233, or the separator body 231 being cut.

The cutting member 7000 is arranged at a position close to a winding structure of the winding apparatus 5000, to separate a negative electrode plate 233 and a positive electrode plate 234 wound onto the winding mechanism from the negative electrode plate roll 3000 and the positive electrode plate roll 4000, so that the winding of the positive electrode plate 234 and the negative electrode plate 233 is stopped earlier.

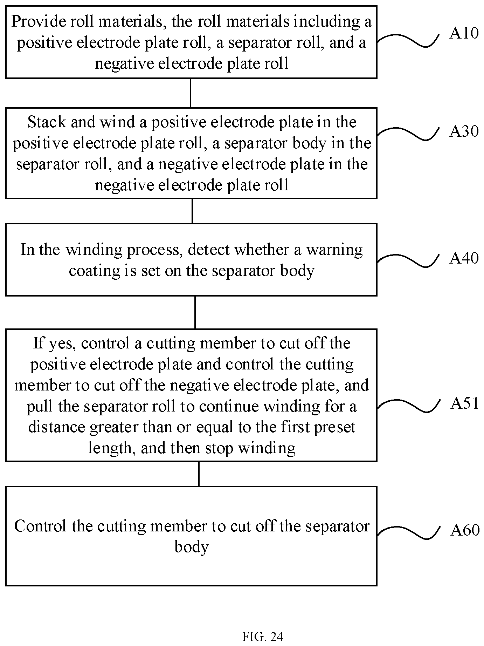

In some embodiments, optionally, referring to FIG. 24, after the pulling the separator roll 2000 for a distance greater than or equal to the first preset length L1, and then stopping winding, the manufacturing method of electrode assembly further includes:
A60. controlling the cutting member 7000 to cut off the separator body 231.

When the separator body 231 is wound individually for a specific distance, a connecting member 30 between two separator bodies 231 has been peeled off from the separator roll 2000 and has not been wound between the positive electrode plate 234 and the negative electrode plate 233 in this case. If the cutting member 7000 is controlled to cut off the separator body 231, the connecting member 30 is also cut off from the separator roll 2000, thereby preventing the connecting member 30 from affecting a next winding for an electrode assembly 23.

Further, in this case, the negative electrode plate 233, the positive electrode plate 234, and the separator are all cut off from the roll material. Then, an operation may be performed to cut off the separator body 231 which was rolled individually in the end by the specific distance on the separator body 231 to form and package a final electrode assembly 23.

In some embodiments, optionally, each time winding is performed for forming an electrode assembly 23, a distance wound by the separator body 231 individually in the end should be less than a distance covered by the negative electrode plate 233 or the positive electrode plate 234 wound onto the electrode assembly 23 each time winding is performed for forming the electrode assembly 23, so as to ensure that a connecting member 30 on the tail end b of the separator body 231 can be cut off from the separator roll 2000 by the cutting member 7000 without affecting the pulling and winding of the separator body 231 next time an electrode assembly 23 is wound.

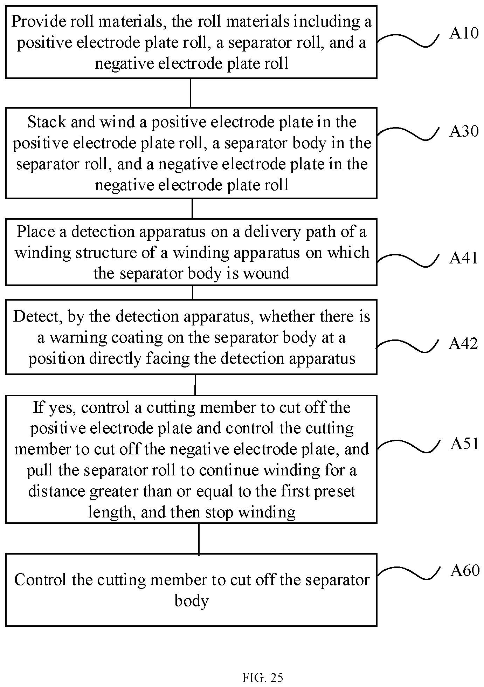

In some embodiments, optionally, referring to FIG. 25, the detecting whether the warning coating 232 is provided on the separator body 231 specifically includes:
A41. placing a detection apparatus 6000 on a delivery path of the winding structure of the winding apparatus 5000 on which the separator body 231 is wound; and
A42. detecting, by the detection apparatus 6000, whether there is the warning coating 232 on the separator body 231 at a position directly facing the detection apparatus.

The delivery path refers to a traction path that the traction structure drives the separator body 231 to be wound onto the winding structure, and all the separator bodies 231 are wound onto the winding structure through this delivery path to form final electrode assemblies 23.

The detection apparatus 6000 is a sensor structure converting optical signals into electrical signals. When the warning coating 232 reaches the position directly facing the detection apparatus 6000, a sensor can sense the detection part and send out a warning signal. Depending on whether the warning signal is sent out, the positive electrode plate 234 and the negative electrode plate 233 are controlled to stop winding or not. Optionally, the detection apparatus 6000 may be a color sensor, an infrared sensor, or another structure.

In this way, the detection apparatus 6000 is arranged matching the warning coating 232, allowing for identification of the warning coating 232.

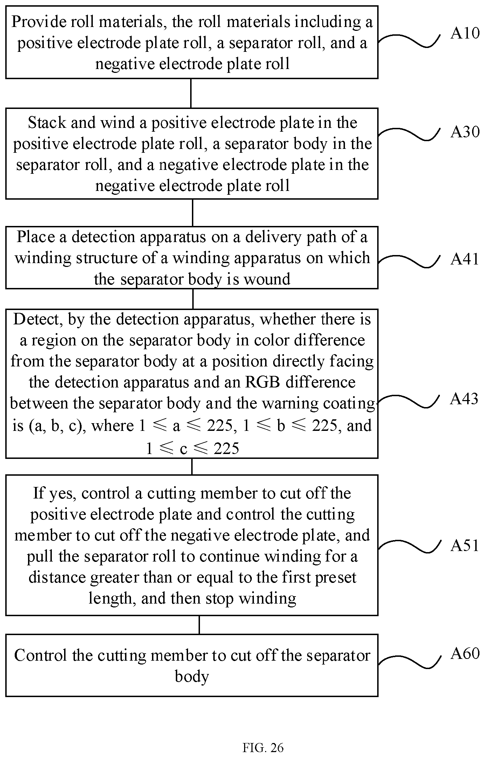

In some embodiments, optionally, referring to FIG. 26, the detecting, by using the detection apparatus, whether there is the warning coating 232 on the separator body 231 at a position directly facing the detection apparatus specifically includes:
A43. detecting whether there is a region on the separator body 231 that has a color difference with the separator body 231 and an RGB difference between the separator body 231 and the warning coating 232 is (a, b, c), where 1 ≤ a ≤ 225, 1 ≤ b ≤ 225, and 1 ≤ c ≤ 225.

If there is a region that has a color difference with the separator body 231, the region is the warning coating 232. If there is no region that has a color difference with the separator body 231, it means that the separator body 231 is not provided with the warning coating 232. The RGB color difference values between the separator body 231 and the warning coating 232 are limited in the range of 1-225, to guarantee that the warning coating 232 is clearly distinguishable from the separator body 231 in color and therefore can be identified to produce a warning effect.

In some embodiments, optionally, the RGB difference between the separator body 231 and the warning coating 232 is (a, b, c), where 1 ≤ a ≤ 220, 1 ≤ b ≤ 220 and 1 ≤ c ≤ 220.

Within this range, the warning coating 232 is clearly distinguishable from the separator body 231 in color.

In a specific embodiment, the surface of the separator body 231 can be controlled to be white, and RGB values of the color of the warning coating 232 are set to have a lower limit of (1, 176, 241) and an upper limit of (25, 38, 213).

In other embodiments, the surface of the separator body 231 may alternatively be set to any color and the surface of the warning coating 232 may be set to a color different from the color of the surface of the separator body 231, which is not limited in this application.

In some embodiments, besides the color difference, the parameters on the surfaces of the warning coating 232 and the separator body 231 can also be different, such as hue, brightness, chroma, glossiness, and color difference, allowing the warning coating 232 to be accurately and easily detected by an external detection apparatus.

In the foregoing embodiments, the manner of arranging the detection apparatus 6000 to detect the warning coating 232 on the separator body 231 is also applicable to the positive electrode plate and the negative electrode plate. Details are not repeated in this application.

It can be understood that the warning coating 232 can not only be used for providing a warning for the composition structures of the electrode assembly 23, that is, the positive electrode plate, the negative electrode plate, and the separator, but also can be used in other structures, such as roll materials for current collectors or others, and this is not limited in this application.

According to another aspect of this application, a manufacturing device for preparing the electrode assembly 23 in any one of the foregoing embodiments is further provided, including a winding apparatus 5000 and a detection apparatus 6000. The winding apparatus 5000 is configured to stack and wind a positive electrode plate 234 in a positive electrode plate roll 4000, a separator body 231 in a separator roll 2000, and a negative electrode plate 233 in a negative electrode plate roll 3000. A warning coating 232 is applied on at least one of the positive electrode plate roll 4000, the separator roll 2000, and the negative electrode plate roll 3000. The detection apparatus 6000 is located on a delivery path of the separator body 231 in the separator roll 2000. The detection apparatus 6000 is configured to detect whether the warning coating 232 is provided on at least one of the positive electrode plate roll 4000, the separator roll 2000, and the negative electrode plate roll 3000.

The separator roll 2000 includes a separator body 231 and a warning coating 232 provided on the separator body 231. The separator roll 2000 has a head end and a tail end formed at two ends in its own winding direction, the tail end is a roll core of the separator roll 2000, and the warning coating 232 is configured to be spaced from the tail end by a first preset length The detection apparatus 6000 is configured to detect whether the warning coating 232 is provided on the separator body 231.

In some embodiments, the positive electrode plate in the positive electrode plate roll includes a positive electrode plate body and a warning coating provided on the positive electrode plate body, and the detection apparatus is further configured to detect whether the warning coating is provided on the positive electrode plate body.

In some embodiments, the negative electrode plate in the negative electrode plate roll includes a negative electrode plate body and a warning coating provided on the negative electrode plate body, and the detection apparatus is further configured to detect whether the warning coating is provided on the negative electrode plate body.

According to some embodiments of this application, referring to FIG. 5 to FIG. 7, this application provides a separator roll 2000, a preparation method of separator roll, and a manufacturing method of electrode assembly. A plurality of separator bodies 231 connected head-to-tail are wound on the separator roll 2000, and adjacent separator bodies 231 are bonded to each other by a splicing adhesive. Each separator body 231 is provided with a warning coating 232, so that in the process of peeling off the separator bodies 231 from the separator roll 2000 and winding them in sequence to form the electrode assemblies 23, the warning coating 232 on each separator body 231 provides a warning in advance for the position of the splicing adhesive at the tail end b of the separator body 231 to prevent the splicing adhesive from being wound into the electrode assembly 23 due to its indiscernible position. It can be understood that with the warning in advance for the position of the tail end b of a last separator body 231, a lack of separator body due to insufficient length of the tail end b can be avoided when the last separator body 231 is peeled off and wound onto the electrode assembly 23.

According to another aspect of this application, a secondary battery is further provided, including an electrode assembly prepared using the manufacturing method of electrode assembly in any one of the foregoing embodiments. Optionally, the secondary battery includes a battery cell, a battery module, and a battery pack.

According to another aspect of this application, a battery cell 20 is further provided, including a housing 22 and an electrode assembly 23 accommodated in the housing 22 and prepared using the manufacturing method of electrode assembly in any one of the foregoing embodiments.

According to another aspect of this application, a battery 100 is further provided, including the battery cells 20 in the foregoing embodiment.

According to another aspect of this application, an electric device is further provided, including the secondary battery in the foregoing embodiment, where the secondary battery is configured to supply electrical energy.

According to another aspect of this application, an electric device is further provided, including the battery 100 in the foregoing embodiment, where the battery 100 is configured to supply electrical energy.

According to another aspect of this application, a slurry is further provided, applied as a warning coating in a secondary battery, where the slurry includes the following raw materials in parts by mass: 1-40 parts of binder, 5-50 parts of pigment, and 30-95 parts of solvent. The use of the slurry in preparation of the warning coating applied to the secondary battery to prepare the warning coating facilitates the identification of the warning coating, and increases the sensitivity of identification of the warning coating, thereby improving the manufacturing yield of electrode assemblies.

Optionally, as a choice, the parts by mass of the binder may be 3 parts, 5 parts, 8 parts, 10 parts, 15 parts, 20 parts, 25 parts, 30 parts, 35 parts, 40 parts, or the like. Optionally, as a choice, the parts by mass of the pigment may be 10 parts, 20 parts, 25 parts, 30 parts, 40 parts, 50 parts, or the like. As a choice, the parts by mass of the solvent may be 30 parts, 40 parts, 50 parts, 60 parts, 70 parts, 80 parts, 90 parts, or the like.

Solid content of the slurry is 3-60%; and optionally, the solid content of the slurry is 5-30%. Optionally, the solid content of the slurry is 8%, 10%, 15%, 20%, 25%, 35%, 40%, 50%, 60%, or the like.

Optionally, viscosity of the slurry is 10-2000 mpa·s; and optionally, the viscosity of the slurry is 30-500 mpa·s. For example, the viscosity of the slurry may be but is not limited to 10 mpa·s, 30 mpa·s, 80 mpa·s, 100 mpa·s, 150 mpa·s, 200 mpa·s, 250 mpa·s, 300 mpa·s, 500 mpa·s, 800 mpa·s, and 1000 mpa·s. Optionally, the viscosity can be tested according to GB/T 2794-2013.

According to another aspect of this application, a secondary battery assembly is provided, including an assembly body and a warning coating on at least one surface of the assembly body, where the warning coating is prepared from the foregoing slurry.

In some embodiments, thickness of the warning coating is less than or equal to 2 µm. An ultra-thin warning coating can be obtained by applying the slurry in this application, effectively reducing the possible influence of the addition of the warning coating on the battery assembly. Optionally, the thickness of the warning coating is less than or equal to 1.5 µm. Optionally, the thickness of the warning coating is less than or equal to 1.2 µm. Optionally, the thickness of the warning coating is less than or equal to 1 µm. Optionally, the thickness of the warning coating is less than or equal to 0.8 µm. Optionally, the thickness of the warning coating is less than or equal to 0.5 µm.

In some embodiments, air permeability of the warning coating is less than or equal to 50 s/100 mL. Optionally, the air permeability of the warning coating is less than or equal to 40 s/100 mL. Optionally, the air permeability of the warning coating is less than or equal to 30 s/100 mL. Optionally, the air permeability of the warning coating is less than or equal to 20 s/100 mL. Optionally, the air permeability of the warning coating is less than or equal to 10 s/100 mL.

Optionally, the air permeability is measured using an air permeability tester. The reference standard is GB/T 36363-2018. In the environment of test temperature and humidity/normal pressure, under a pressure of 1.21 kPa applied by a test instrument, a time required for 100 ml air to pass through an assembly body with an area of 6.45 cm² is tested.

In some embodiments, the assembly body includes one or more of a separator body, a positive electrode plate body, and a negative electrode plate body.

According to another aspect of this application, a preparation method of secondary battery assembly is provided, including: providing an assembly body, the assembly body having a head end and a tail end formed in its length direction; applying and drying the foregoing slurry on the assembly body to prepare a warning coating, the warning coating being configured to be spaced from the tail end by a first preset length. The application and drying of the slurry can have the warning coating conveniently formed on the assembly body and facilitate accurate control of parameters such as position, thickness, and surface density of the warning coating. It can be understood that the first preset length can be selected from the first preset length L1 listed herein.

In some embodiments, in the preparation of the warning coating, the drying temperature is 20-30°C. The slurry in this application can be dried to a film at a relatively low temperature, forming a warning coating, and drying costs in the preparation process of the warning coating can be reduced. Optionally, the drying temperature may be 22°C, 25°C, 28°C, or the like. It can be understood that the drying of the slurry can be completed at room temperature, and then the warning coating can be formed.

In some embodiments, in the preparation of the warning coating, the drying time is 5-60 seconds. The slurry in this application can be dried into a film in a relatively short time, forming a warning coating, so that the drying time of the slurry can be shortened and the preparation efficiency of the warning coating can be improved. Optionally, the drying time may be 8, 10, 15, 20, 30, 40, 50 seconds, or the like.

In some embodiments, as examples of binders for selection, the binders include a polymer binder. Optionally, the polymer binder includes one or more of polyacrylic acid, polymethacrylic acid, polyacrylate, pure acrylic emulsion, sodium polyacrylate, acrylic-styrene copolymer, acrylate-styrene copolymer, polyvinylpyrrolidone, rubber, epoxy resin, polyurethane, acrylonitrile copolymer, titanate coupling agent, and fluorine-containing polyolefin. It can be understood that polyacrylate includes one or more of polymethyl acrylate, polyethyl acrylate, and polyneopentyl glycol diacrylate. It can be understood that the rubber includes styrene-butadiene rubber. It can be understood that fluorine-containing polyolefin includes one or more of polyvinylidene fluoride, vinylidene fluoride copolymer, and their modified derivatives, where the modified derivatives include one or more of carboxylic acid modified derivatives, acrylic acid modified derivatives, and acrylonitrile modified derivatives.

In some embodiments, molecular weight of the polymer binder is 0.1 × 10⁴ - 100 × 10⁴. For example, the molecular weight of the polymer binder is 0.1 × 10⁴, 1 × 10⁴, 10 × 10⁴, 50 × 10⁴, or the like.

In some embodiments, Dv90 of the polymer binder is less than or equal to 10 µm; and optionally, Dv90 of the polymer binder is less than or equal to 4 µm. It can be understood that in this application, Dv90 refers to the particle size corresponding to the cumulative particle size distribution number of particles reaching 90% in the volume cumulative distribution curve, and its physical meaning is that particles with a particle size smaller than this size account for 90%. In an example, Dv90 can be easily measured in accordance with a particle size distribution laser diffraction method in GB/T 19077-2016 by using a laser particle size analyzer, for example, a laser particle size analyzer of Mastersizer 2000E from Malvern Instruments Ltd. of UK. Optionally, Dv90 of the polymer binder is less than or equal to 8 µm. Optionally, Dv90 of the polymer binder is less than or equal to 6 µm. Optionally, Dv90 of the polymer binder is less than or equal to 2 µm.

In some embodiments, the pigment includes one or more of azo pigments, phthalocyanine pigments, quinacridone pigments, isoindolinone pigments, isoindoline pigments, benzimidazolone pigments, dioxine pigments, perylene pigments, perinone pigments, anthraquinone pigments, anthrapyrimidine pigments, and indanthrene pigments.

Optionally, color index (color index) numbers are used to represents a specific example. Pigments include one or more of the following: Pigment Black 7, Pigment Blue 6, Pigment Blue 15, Pigment Blue 15:1, Pigment Blue 15:3, Pigment Blue 15:4, Pigment Blue 15:6, Pigment Blue 17, Pigment Blue 60, Pigment Green 7, Pigment Orange 21, Pigment Red 48:2, C.I. Pigment Red 53:1, Pigment Red 122, Pigment Red 144, Pigment Red 146, Pigment Red 149, Pigment Red 166, Pigment Red 168, Pigment Red 177, Pigment Red 178, Pigment Red 179, Pigment Red 185, Pigment Red 206, Pigment Red 207, Pigment Red 209, Pigment Red 220, Pigment Red 221, Pigment Violet 1, Pigment Violet 3, Pigment Violet 19, Pigment Violet 23, Pigment Violet 29, Pigment Violet 30, Pigment Violet 37, Pigment Violet 40, Pigment Violet 50, Pigment Yellow 12, Pigment Yellow 13, Pigment Yellow 14, Pigment Yellow 17, Pigment Yellow 20, Pigment Yellow 24, Pigment Yellow 74, Pigment Yellow 83, Pigment Yellow 86, Pigment Yellow 93, Pigment Yellow 94, Pigment Yellow 95, Pigment Yellow 109, Pigment Yellow 110, Pigment Yellow 117, Pigment Yellow 120, Pigment Yellow 125, Pigment Yellow 128, Pigment Yellow 137, Pigment Yellow 138, Pigment Yellow 139, Pigment Yellow 147, Pigment Yellow 148, Pigment Orange 5, Pigment Orange 13, Pigment Orange 17, Pigment Orange 36, Pigment Orange 37, Pigment Orange 38, Pigment Orange 43, Pigment Orange 51, Pigment Orange 55, Pigment Orange 59, Pigment Orange 61, Pigment Orange 64, Pigment Orange 71, and Pigment Orange 74. It can be understood that in selection of pigments, water-soluble pigments and water-insoluble pigments can be selected based on water solubility requirements of the pigment.

In some embodiments, as a choice of solvent, a boiling point of the solvent at standard atmospheric pressure is 30-180°C. Optionally, the boiling point of the solvent at standard atmospheric pressure is 40-130°C. Optionally, the solvent includes one or more of benzene, toluene, xylene, chlorobenzene, dichlorobenzene, dichloromethane, pentane, hexane, octane, cyclohexane, propylene oxide, methanol, ethanol, isopropanol, ether, ethylene glycol monomethyl ether, ethylene glycol monoethyl ether, ethylene glycol monobutyl ether, methyl acetate, ethyl acetate, propyl acetate, acetone, methyl ethyl ketone, methyl isobutyl ketone, cyclohexanone, methyl cyclohexanone, acetonitrile, pyridine, phenol, and water.

In some embodiments, the slurry further includes 1-30 parts by mass of an additive. Optionally, the additive includes one or more of driers, tougheners, emulsifiers, thickeners, dispersants, defoamers, leveling agents, mold inhibitors, and antistatic agents. Optionally, as a choice, the parts by mass of the additive may be 3 parts, 5 parts, 8 parts, 10 parts, 15 parts, 20 parts, 25 parts, 30 parts, or the like.

As examples of driers for selection, the driers include one or more of oxides, salts, and organic acid soaps of at least one of cobalt, manganese, lead, iron, zinc, and calcium.

As examples of tougheners for selection, the tougheners include one or more of nitrile rubber, carboxylated nitrile rubber, polysulfide rubber, silicone rubber, neoprene rubber, acrylate rubber, polyether, polysulfone, polyimide, polyethersulfone, polyphenylether ketone, polyvinyl alcohol, polyvinyl butyral, polyvinyl acetate, chlorosulfonated polyethylene, acrylonitrile butadiene styrene (ABS) copolymer, styrene butadiene styrene copolymer (SBS), hydrogenated styrene butadiene copolymer (SEBS), nano calcium carbonate, nano titanium dioxide, and their respective modified derivatives.

As examples of emulsifiers for selection, the emulsifiers include one or more of fatty acid soap, alkyl sulfate, alkylbenzene sulfonate, phosphate, alkylamine, quaternary ammonium salt, polyoxyethylene ether, polyoxypropylene ether, ethylene oxide-propylene oxide copolymer, polyol fatty acid ester, and polyvinyl alcohol. Optionally, the alkyl sulfate includes sodium dodecyl sulfate. Optionally, the alkylbenzene sulfonate includes sodium dodecyl benzene sulfonate. Optionally, the alkylamine includes N-dodecyldimethylamine.

As examples of thickeners for selection, the thickeners include one or more of bentonite, attapulgite, aluminum silicate, methylcellulose, carboxymethyl cellulose, hydroxyethyl cellulose, hydroxypropyl methylcellulose, acrylic acid, maleic acid, maleic anhydride, methacrylic acid, polyurethane, polysaccharide, and polyoxyethylene.

As examples of dispersants for selection, the dispersants include one or more of sodium oleate, carboxylate, sulfate, sulfonate, amine salt, quaternary amine salt, pyridinium salt, polyol, phosphate salt, polycaprolactone polyol-polyethyleneimine copolymer, acrylate, polyurethane, polyether, and polyester. Optionally, the polyol includes ethylene glycol.

As examples of defoamers for selection, the defoamers include one or more of mineral oil defoamers, alcohol defoamers, fatty acid defoamers, fatty acid ester defoamers, amide defoamers, phosphate defoamers, organosilicone defoamers, polyether defoamers, and polyether modified polysiloxane defoamers.

As examples of leveling agents for selection, the leveling agents include one or more of isophorone, diacetone alcohol, Solvesso 150, acrylic leveling agents, organosilicone leveling agents, and fluorocarbon leveling agents.

As examples of mold inhibitors for selection, the mold inhibitors include one or more of biphenyl, o-phenylphenol, 2-pyridinethiol-1-zinc oxide, ammonium persulfate, calcium phosphate, zinc ion compounds, silver ion compounds, copper ion compounds, mustard extracts, and mugwort.

As examples of antistatic agents for selection, the antistatic agents include one or more of carboxylic acid anions, sulfonic acid anions, sulfuric acid anions, phosphoric acid anions, amine salt cations, quaternary ammonium salt cations, hydroxyl groups, ether groups, alkyl groups, and alkylaryl groups. Optionally, the antistatic agent is selected from organic matters containing one or more of carboxylic acid anions, sulfonic acid anions, sulfuric acid anions, phosphoric acid anions, amine salt cations, quaternary ammonium salt cations, hydroxyl groups, ether groups, alkyl groups, and alkylaryl groups.

In some embodiments, the preparation method of slurry includes mixing a binder, a pigment, and a solvent. Optionally, the mixing includes stirring, and the stirring time is 0.5-96 hours. Optionally, the stirring speed is 200-5000 rpm. For example, the stirring time may be but is not limited to 1 hour, 1.5 hours, 5 hours, 10 hours, 24 hours, 48 hours, 72 hours, or the like. The stirring speed may be but is not limited to 200 rpm, 500 rpm, 800 rpm, 1000 rpm, 1500 rpm, 2000 rpm, 2500 rpm, 3000 rpm, 3500 rpm, 4000 rpm, and 5000 rpm.

It can be understood that in the mixing of the binder, the pigment, and the solvent, the binder can be added to the solvent first and stirred for mixing, and then the pigment can be added and stirred for mixing. Alternatively, the pigment and the solvent can be stirred for mixing first, and then the binder can be added and stirred for mixing. It can also be understood that the order of adding the binder, the pigment, and the solvent is not limited.

It can also be understood that in the slurry preparation process, the solvent can be added at once or in multiple steps. When added in multiple steps, the amount added each time can be the same or different. The number of solvent additions and the amount added each time can be appropriately selected based on the dispersion and requirements of the slurry.

In some embodiment, the preparation method of slurry further includes adding an additive into the mixed system of the binder, the pigment, and the solvent.

In some embodiments, the preparation method of slurry includes mixing a binder, a pigment, a solvent, and an additive. It can also be understood that the order of adding the binder, the pigment, the solvent, and the additive is not limited.

In some embodiments, the slurry preparation further includes: after mixing the binder, the pigment, and the solvent, filtering and demagnetizing a resulting solution.

In some embodiments, the slurry preparation further includes: after mixing the binder, the pigment, the solvent, and the additive, filtering and demagnetizing a resulting solution.

The following are specific examples.

### Example 1

In this example, the slurry included 3 parts by mass of polyvinylidene fluoride binder, 6 parts by mass of C.I. Pigment Blue 17, 90 parts by mass of ethanol solvent, and 1 part by mass of organosilicone defoamer additive.

### (1) Preparation of slurry

The binder was added to 10 parts of the solvent and stirred together at 1000 rpm for 60 minutes. Then the pigment was added and stirred together for 60 minutes, and the remaining solvent was added and stirred together for 30 minutes. Then the additive was added and stirred together for 60 minutes, and a resulting mixed solution was filtered and demagnetized to obtain a slurry.

### (2) Preparation of separator roll

A separator body was provided, where the separator body had a head end and a tail end formed in its length direction; and the slurry obtained in (1) was applied on the separator body, and dried to prepare a warning coating, where the warning coating is configured to be spaced from the tail end by a first preset length. The separator body was wound in the length direction to form a separator roll with the tail end as a roll core. The thickness and air permeability of the warning coating are shown in Table 1.

### (3) Preparation of electrode assembly

Roll materials were provided, the roll materials including a positive electrode plate roll, the separator roll obtained in (2), and a negative electrode plate roll, where the separator roll included a separator body and a warning coating provided on the separator body, the separator roll had a head end and a tail end formed on two ends in its own winding direction, the tail end was a roll core of the separator roll, and the warning coating was configured to be spaced from the tail end by a first preset length. The positive electrode plate in the positive electrode plate roll, the separator body in the separator roll, and the negative electrode plate in the negative electrode plate roll were stacked and wound. In the winding process, whether the warning coating is provided on the separator body was detected. If yes, the positive electrode plate and the negative electrode plate were controlled to stop winding, and the separator roll was pulled to continue winding for a distance greater than or equal to the first preset length, and then the winding stopped.

Positive electrode plate: Positive electrode active material LiNi_{0.8}Co_{0.1}Mn_{0.1}O₂ (NCM811), conductive agent acetylene black, and binder polyvinylidene fluoride (PVDF) were mixed at a mass ratio of 97:1.5:1.5 and added to solvent N-methylpyrrolidone (NMP), fully stirred and mixed to uniformity to produce a positive electrode slurry (with a solid content of 70%). Then the positive electrode slurry was uniformly applied onto a 13 µm thick current collector aluminum foil with a coating amount of 0.2 mg/mm², followed by drying and cold pressing, to obtain a positive electrode plate.

Negative electrode plate: Active substance artificial graphite, conductive agent acetylene black, binder styrene butadiene rubber (SBR), and thickener sodium carboxymethyl cellulose (CMC) at a weight ratio of 96.5:0.7:1.8:1 were fully stirred and mixed to uniformity in a deionized water solvent system to form a negative electrode slurry. The negative electrode slurry was uniformly applied onto a copper foil with a coating amount of 0.1 mg/mm², and the copper foil was dried at room temperature and then transferred to an oven for drying at 120°C for 1 hour, followed by cold pressing and slitting, to obtain a negative electrode plate.

Separator body: A polypropylene separator of a thickness of 13 µm was used as the separator body.

### (4) Preparation of battery

The electrode assembly obtained in (3) was assembled into a battery.

### Examples 2 to 5

Examples 2 to 5 are different from Example 1 in the thickness and air permeability of slurry and warning coating, as shown in Table 1.

### Example 6

This example is different from Example 2 in that the solvent is methyl n-butanone.

### Comparative example 1

This comparative example is different from Example 1 in that no warning coating is formed on the separator body.

### Comparative examples 2 and 3

Comparative examples 2 and 3 are different from Example 1 in the thickness and air permeability of slurry and warning coating, as shown in Table 1.

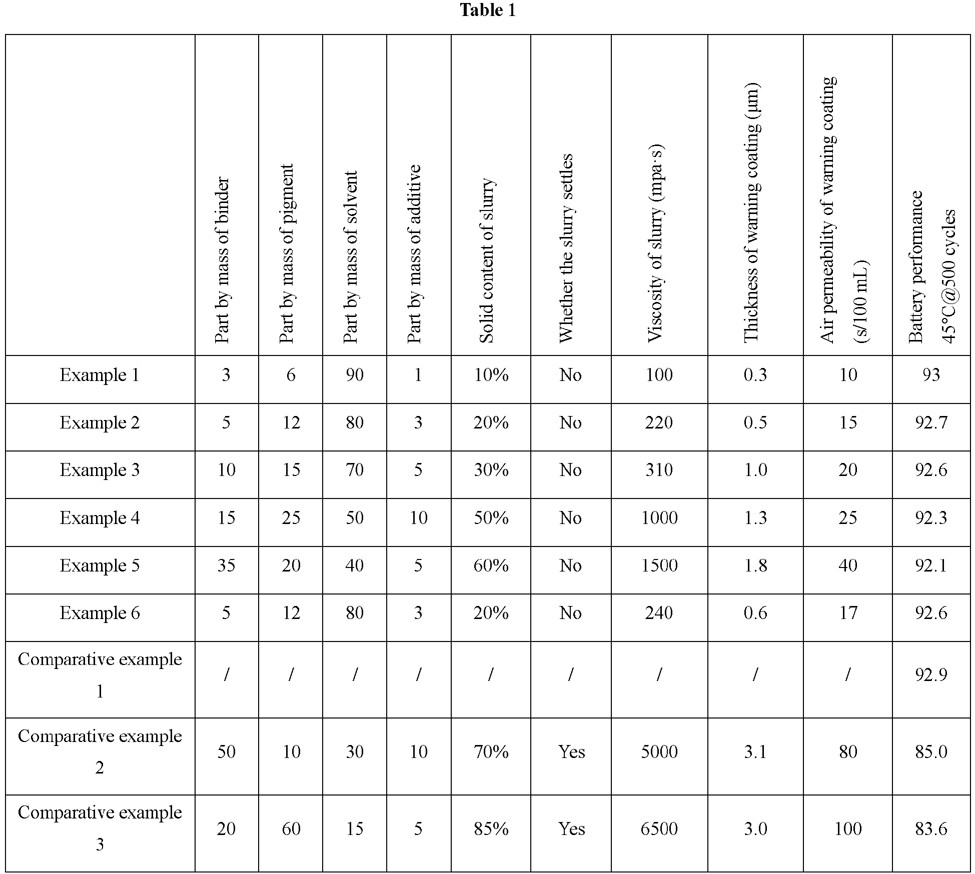

The dispersion of the slurries in examples and comparative examples was tested. The testing method was as follows: leaving a slurry standing for 20 days and visually checking whether the slurry settles. The results are shown in Table 1.

The performance test results of the battery are shown in Table 1.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application patent. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. A slurry applied as a warning coating in a secondary battery, wherein the slurry comprises the following raw materials in parts by mass: 1-40 parts of binder, 5-50 parts of pigment, and 30-95 parts of solvent.

2. The slurry according to claim 1, satisfying at least one of the following characteristics:
(1) solid content of the slurry is 3-60%; and optionally, the solid content of the slurry is 5-30%; and
(2) viscosity of the slurry is 10-2000 mpa·s; and optionally, the viscosity of the slurry is 30-500 mpa·s.

3. The slurry according to either one of claim 1 or 2, wherein the binder comprises a polymer binder;
optionally, the polymer binder comprises one or more of polyacrylic acid, polymethacrylic acid, polyacrylate, pure acrylic emulsion, sodium polyacrylate, acrylic-styrene copolymer, acrylate-styrene copolymer, polyvinylpyrrolidone, rubber, epoxy resin, polyurethane, acrylonitrile copolymer, titanate coupling agent, and fluorine-containing polyolefin;
optionally, the polymer binder comprises a fluorine-containing polyolefin;
optionally, the fluorine-containing polyolefin comprises one or more of polyvinylidene fluoride, vinylidene fluoride copolymer, and their modified derivatives;
optionally, the modified derivatives comprise one or more of carboxylic acid modified derivatives, acrylic acid modified derivatives, and acrylonitrile modified derivatives;
optionally, molecular weight of the polymer binder is 0.1 × 10⁴ - 100 × 10⁴; and
optionally, Dv90 of the polymer binder is less than or equal to 10 µm; and optionally, Dv90 of the polymer binder is less than or equal to 4 µm.

4. The slurry according to any one of claims 1 to 3, wherein the pigment comprises one or more of azo pigments, phthalocyanine pigments, quinacridone pigments, isoindolinone pigments, isoindoline pigments, benzimidazolone pigments, dioxine pigments, perylene pigments, perinone pigments, anthraquinone pigments, anthrapyrimidine pigments, and indanthrene pigments.

5. The slurry according to any one of claims 1 to 4, wherein a boiling point of the solvent at standard atmospheric pressure is 30-180°C;
optionally, the boiling point of the solvent at standard atmospheric pressure is 40-130°C; and
optionally, the solvent comprises one or more of benzene, toluene, xylene, chlorobenzene, dichlorobenzene, dichloromethane, pentane, hexane, octane, cyclohexane, propylene oxide, methanol, ethanol, isopropanol, ether, ethylene glycol monomethyl ether, ethylene glycol monoethyl ether, ethylene glycol monobutyl ether, methyl acetate, ethyl acetate, propyl acetate, acetone, methyl ethyl ketone, methyl isobutyl ketone, cyclohexanone, methyl cyclohexanone, acetonitrile, pyridine, phenol, and water.

6. The slurry according to any one of claims 1 to 5, wherein the slurry further comprises 1-30 parts by mass of an additive; and
optionally, the additive comprises one or more of driers, tougheners, emulsifiers, thickeners, dispersants, defoamers, leveling agents, mold inhibitors, and antistatic agents.

7. The slurry according to claim 6, wherein the additive satisfies one or more of the following characteristics:
(1) the drier comprises one or more of oxides, salts, and organic acid soaps of at least one of cobalt, manganese, lead, iron, zinc, and calcium;
(2) the toughener comprises one or more of nitrile rubber, polysulfide rubber, silicone rubber, neoprene rubber, acrylate rubber, polyether, polysulfone, polyimide, polyethersulfone, polyphenylether ketone, polyvinyl alcohol, polyvinyl butyral, polyvinyl acetate, chlorosulfonated polyethylene, acrylonitrile butadiene styrene copolymer, styrene butadiene styrene copolymer, hydrogenated styrene butadiene copolymer, nano calcium carbonate, nano titanium dioxide, and their respective modified derivatives;
(3) the emulsifier comprises one or more of fatty acid soap, alkyl sulfate, alkylbenzene sulfonate, phosphate, alkylamine, quaternary ammonium salt, polyoxyethylene ether, polyoxypropylene ether, ethylene oxide-propylene oxide copolymer, polyol fatty acid ester, and polyvinyl alcohol;
(4) the thickener comprises one or more of bentonite, attapulgite, aluminum silicate, methylcellulose, carboxymethyl cellulose, hydroxyethyl cellulose, hydroxypropyl methylcellulose, acrylic acid, maleic acid, maleic anhydride, methacrylic acid, polyurethane, polysaccharide, and polyoxyethylene;
(5) the dispersant comprises one or more of sodium oleate, carboxylate, sulfate, sulfonate, amine salt, pyridinium salt, polyol, phosphate salt, polycaprolactone polyol-polyethyleneimine copolymer, acrylate, polyether, and polyester;
(6) the defoamer comprises one or more of mineral oil defoamers, alcohol defoamers, fatty acid defoamers, fatty acid ester defoamers, amide defoamers, phosphate defoamers, organosilicone defoamers, polyether defoamers, and polyether modified polysiloxane defoamers;
(7) the leveling agent comprises one or more of isophorone, diacetone alcohol, acrylic leveling agents, organosilicone leveling agents, and fluorocarbon leveling agents;
(8) the mold inhibitor comprises one or more of biphenyl, o-phenylphenol, 2-pyridinethiol-1-zinc oxide, ammonium persulfate, calcium phosphate, zinc ion compounds, silver ion compounds, copper ion compounds, mustard extracts, and mugwort; and
(9) the antistatic agent comprises one or more of carboxylic acid anions, sulfonic acid anions, sulfuric acid anions, phosphoric acid anions, amine salt cations, quaternary ammonium salt cations, hydroxyl groups, ether groups, alkyl groups, and alkylaryl groups.

8. The preparation method of the slurry according to any one of claims 1 to 7, comprising:
mixing the binder, the pigment, and the solvent; and
optionally, the mixing comprises stirring, and the stirring time is 0.5-96 hours, and/or the stirring speed is 200-5000 rpm.

9. Application of the slurry according to any one of claims 1 to 7 to prepare a warning coating in a secondary battery.

10. A secondary battery assembly, comprising an assembly body and a warning coating on at least one surface of the assembly body, wherein the warning coating is prepared from the slurry according to any one of claims 1 to 7.

11. The secondary battery assembly according to claim 10, wherein the warning coating satisfies at least one of the following characteristics:
(1) thickness of the warning coating is less than or equal to 2 µm; and
(2) air permeability of the warning coating is less than or equal to 50 s/100 mL.

12. The secondary battery assembly according to either one of claim 10 or 11, wherein the assembly body comprises a separator body, a positive electrode plate body, or a negative electrode plate body.

13. A preparation method of secondary battery assembly, comprising:
providing an assembly body, the assembly body having a head end and a tail end formed in its length direction; and
applying and drying the slurry according to any one of claims 1 to 7 on the assembly body to prepare a warning coating, the warning coating being configured to be spaced from the tail end by a first preset length.

14. The preparation method of secondary battery according to claim 13, wherein the drying temperature is 20-30°C, and/or the drying time is 5-60 seconds.

15. A separator roll, wherein the separator roll comprises:
a separator body, the separator body having a head end and a tail end in length direction and being constructed to be capable of winding in the length direction to form a separator roll with the tail end as a roll core; and
a warning coating provided on the separator body, the warning coating being configured to be spaced from the tail end by a first preset length.

16. The separator roll according to claim 15, wherein the separator roll comprises a plurality of the separator bodies, every two adjacent separator bodies being connected head-to-tail by a connecting member, with a tail end of the separator body in the innermost layer forming the roll core.

17. The separator roll according to either one of claim 15 or 16, wherein one warning coating is provided on each of the separator bodies.

18. The separator roll according to any one of claims 15 to 17, wherein the warning coating is provided on at least one surface of the separator body, and the warning coating extends along the length direction and/or width direction of the separator body.

19. The separator roll according to claim 18, wherein the warning coating has a second preset length in the length direction of the separator body, the second preset length being in the range of 1-1000 mm.

20. The separator roll according to claim 19, wherein the second preset length is in the range of 10-50 mm.

21. The separator roll according to claim 18, wherein in the width direction of the separator body, distances between two side edges of the warning coating and two side edges of the separator body are in the range of 1-1000 mm.

22. The separator roll according to claim 18, wherein in the width direction of the separator body, distances between two side edges of the warning coating and two side edges of the separator body are in the range of 5-30 mm.

23. The separator roll according to any one of claims 15 to 22, wherein the warning coating is formed by mixing one or more of rubber, polyacrylic acid, polymethacrylic acid, methyl polyacrylate, ethyl acrylate, pure acrylic emulsion, polyacrylic acid-styrene copolymer, polyvinylpyrrolidone, epoxy resin, neopentyl glycol diacrylate, sodium polyacrylate series, fluorine-containing polyolefins, and the like.

24. The separator roll according to any one of claims 15 to 23, wherein an RGB difference between the separator body and the warning coating is (a, b, c), wherein at least one of a, b, and c is not zero.

25. The separator roll according to claim 16, wherein the connecting member comprises a splicing adhesive formed by mixing one or more of polyethylene terephthalate, epoxy resin, polyurethane, unsaturated polyester resin, phenolic resin, polyacrylic resin, polyvinyl chloride resin, polysulfide rubber, silicone rubber, polyurethane rubber, neoprene rubber, and butyl rubber, to bond a head end and a tail end for two adjacent separator bodies.

26. The separator roll according to any one of claims 15 to 25, wherein the warning coating satisfies at least one of the following characteristics:
(1) thickness of the warning coating is less than or equal to 2 µm, and
(2) air permeability of the warning coating is less than or equal to 50 s/100 mL.

27. The separator roll according to any one of claims 15 to 26, wherein the warning coating is prepared from a slurry, and the slurry comprises the following raw materials in parts by mass: 1-40 parts of binder, 5-50 parts of pigment, and 30-95 parts of solvent.

28. A preparation method of separator roll, wherein the preparation method comprises:
providing a separator body, the separator body having a head end and a tail end formed in its length direction;
arranging a warning coating on the separator body, the warning coating being configured to be spaced from the tail end by a first preset length; and
winding the separator body in the length direction to form a separator roll with the tail end as a roll core.

29. The preparation method of separator roll according to claim 28, wherein the providing a separator body specifically comprises:
providing a plurality of separator bodies, every two separator bodies being connected head-to-tail.

30. The preparation method of separator roll according to claim 29, wherein the every two separator bodies being connected head-to-tail specifically comprises:
connecting a head end and a tail end for every two separator bodies by a connecting member.

31. The preparation method of separator roll according to claim 30, wherein the connecting a head end and a tail end for every two separator bodies by a connecting member specifically comprises:
providing and mixing one or more of polyethylene terephthalate, epoxy resin, polyurethane, unsaturated polyester resin, phenolic resin, polyacrylic resin, polyvinyl chloride resin, polysulfide rubber, silicone rubber, polyurethane rubber, neoprene rubber, and butyl rubber to form a splicing adhesive to bond a head end and a tail end for every two separator bodies.

32. The preparation method of separator roll according to any one of claims 28 to 31, wherein the arranging a warning coating on the separator body specifically comprises:
arranging one warning coating on each of the separator bodies.

33. The preparation method of separator roll according to any one of claims 28 to 32, wherein the arranging a warning coating on the separator body further comprises:
applying the warning coating onto at least one surface of the separator body.

34. The preparation method of separator roll according to any one of claims 28 to 33, wherein the arranging a warning coating on the separator body further comprises:
applying the warning coating along the length direction of the separator body and applying the warning coating along a width direction of the separator body.

35. The preparation method of separator roll according to claim 34, wherein the applying the warning coating along the length direction of the separator body specifically comprises:
applying the warning coating having a second preset length in the length direction of the separator body, the second preset length being in the range of 1-1000 mm.

36. The preparation method of separator roll according to claim 35, wherein the applying the warning coating along the length direction of the separator body further comprises:
applying the warning coating having a second preset length in the length direction of the separator body, the second preset length being in the range of 10-50 mm.

37. The preparation method of separator roll according to any one of claims 34 to 36, wherein the applying the warning coating along a width direction of the separator body further comprises:
applying the warning coating in the width direction of the separator body until distances between two side edges of the warning coating and two side edges of the separator body are in the range of 1-1000 mm.

38. The preparation method of separator roll according to claim 37, wherein the applying the warning coating along a width direction of the separator body further comprises:
applying the warning coating in the width direction of the separator body until distances between two side edges of the warning coating and two side edges of the separator body are in the range of 5-30 mm.

39. The preparation method of separator roll according to any one of claims 28 to 38, wherein before the arranging a warning coating on the separator body, the method further comprises:
providing a warning coating, the warning coating being formed by mixing one or more of rubber, polyacrylic acid, polymethacrylic acid, methyl polyacrylate, ethyl acrylate, pure acrylic emulsion, polyacrylic acid-styrene copolymer, polyvinylpyrrolidone, epoxy resin, neopentyl glycol diacrylate, sodium polyacrylate series, and fluorine-containing polyolefins.

40. A manufacturing method of electrode assembly, comprising the following steps:
providing roll materials, the roll materials comprising a positive electrode plate roll, a separator roll, and a negative electrode plate roll, wherein at least one of the positive electrode plate roll, the separator roll, and the negative electrode plate roll is provided with a warning coating;
stacking and winding a positive electrode plate in the positive electrode plate roll, a separator body in the separator roll, and a negative electrode plate in the negative electrode plate roll; and
in the winding process, detecting whether the warning coating is provided on at least one of the positive electrode plate roll, the separator roll, and the negative electrode plate roll.

41. The manufacturing method of electrode assembly according to claim 40, comprising the following steps:
providing roll materials, the roll materials comprising a positive electrode plate roll, a separator roll, and a negative electrode plate roll, wherein the separator roll comprises a separator body and a warning coating provided on the separator body, the separator roll has a head end and a tail end formed on two ends in its own winding direction, the tail end is a roll core of the separator roll, and the warning coating is configured to be spaced from the tail end by a first preset length;
stacking and winding a positive electrode plate in the positive electrode plate roll, a separator body in the separator roll, and a negative electrode plate in the negative electrode plate roll; and
in the winding process, detecting whether the warning coating is provided on the separator body.

42. The manufacturing method of electrode assembly according to either one of claim 40 or 41, wherein the positive electrode plate in the positive electrode plate roll comprises a positive electrode plate body and a warning coating provided on the positive electrode plate body, and whether the warning coating is provided on the positive electrode plate body is detected in the winding process; and/or
the negative electrode plate in the negative electrode plate roll comprises a negative electrode plate body and a warning coating provided on the negative electrode plate body, and whether the warning coating is provided on the positive electrode plate body is detected in the winding process.

43. The manufacturing method of electrode assembly according to any one of claims 40 to 42, wherein after the detecting whether the warning coating is provided on the separator body, the method further comprises:
if yes, controlling the positive electrode plate and the negative electrode plate to stop winding, pulling the separator roll to continue winding for a distance greater than or equal to the first preset length, and then stopping winding.

44. The manufacturing method of electrode assembly according to claim 43, wherein the controlling the positive electrode plate and the negative electrode plate to stop winding specifically comprises:
controlling a cutting member to cut off the positive electrode plate; and
controlling the cutting member to cut off the negative electrode plate.

45. The manufacturing method of electrode assembly according to either one of claim 43 or 44, wherein after the pulling the separator roll to continue winding for a distance greater than or equal to the first preset length, and then stopping winding, the method further comprises:
controlling the cutting member to cut off the separator body.

46. The manufacturing method of electrode assembly according to any one of claims 40 to 45, wherein the detecting whether the warning coating is provided on the separator body specifically comprises:
placing a detection apparatus on a delivery path of the separator roll; and
detecting, by using the detection apparatus, whether there is the warning coating on the separator body at a position directly facing the detection apparatus.

47. The manufacturing method of electrode assembly according to claim 46, wherein the detecting, by using the detection apparatus, whether there is the warning coating on the separator body at a position directly facing the detection apparatus specifically comprises:
detecting whether there is a region on the separator body that has a color difference with the separator body; and
detecting whether an RGB difference between the separator body and the warning coating is (a, b, c), wherein 1 ≤ a ≤ 225, 1 ≤ b ≤ 225, and 1 ≤ c ≤ 225.

48. The manufacturing method of electrode assembly according to either one of claim 46 or 47, wherein the detecting, by using the detection apparatus, whether there is the warning coating on the separator body at a position directly facing the detection apparatus specifically comprises:
detecting whether there is a region on the separator body that has a color difference with the separator body; and
detecting whether the RGB difference between the separator body and the warning coating is (a, b, c), wherein 20 ≤ a ≤ 220, 20 ≤ b ≤ 220, and 20 ≤ c ≤ 220.

49. The manufacturing method of electrode assembly according to any one of claims 40 to 48, wherein the providing the separator roll specifically comprises:
providing a plurality of separator bodies, with each of the separator bodies having a head end and a tail end formed in its own length direction,
connecting a head end and a tail end for every two separator bodies; and
winding the separator bodies in the length direction to form a separator roll.

50. The manufacturing method of electrode assembly according to claim 49, wherein after the providing a plurality of separator bodies, the method further comprises:
arranging one warning coating on each of the separator bodies.

51. The manufacturing method of electrode assembly according to claim 50, wherein the arranging one warning coating on each of the separator bodies further comprises:
applying the warning coating along the length direction of the separator body and applying the warning coating along a width direction of the separator body.

52. The manufacturing method of electrode assembly according to claim 51, wherein the applying the warning coating along the length direction of the separator body further comprises:
applying the warning coating having a second preset length in the length direction of the separator body, the second preset length being in the range of 1-1000 mm.

53. The manufacturing method of electrode assembly according to claim 52, wherein the applying the warning coating along the length direction of the separator body further comprises:
applying the warning coating having a second preset length in the length direction of the separator body, the second preset length being in the range of 10-50 mm.

54. The manufacturing method of electrode assembly according to any one of claims 51 to 53, wherein the applying the warning coating along a width direction of the separator body further comprises:
applying the warning coating in the width direction of the separator body until distances between two side edges of the warning coating and two side edges of the separator body are in the range of 1-1000 mm.

55. The manufacturing method of electrode assembly according to any one of claims 49 to 54, wherein the arranging one warning coating on each of the separator bodies further comprises:
providing a warning coating, the warning coating being formed by mixing one or more of rubber, polyacrylic acid, polymethacrylic acid, methyl polyacrylate, ethyl acrylate, pure acrylic emulsion, polyacrylic acid-styrene copolymer, polyvinylpyrrolidone, epoxy resin, neopentyl glycol diacrylate, sodium polyacrylate series, fluorine-containing polyolefins, and the like.

56. The manufacturing method of electrode assembly according to any one of claims 40 to 55, wherein the warning coating satisfies at least one of the following characteristics:
(1) thickness of the warning coating is less than or equal to 2 µm; and
(2) air permeability of the warning coating is less than or equal to 50 s/100 mL.

57. The manufacturing method of electrode assembly according to any one of claims 40 to 56, wherein the warning coating is prepared from a slurry, and the slurry comprises the following raw materials in parts by mass: 1-40 parts of binder, 5-50 parts of pigment, and 30-95 parts of solvent.

58. The manufacturing method of electrode assembly according to any one of claims 49 to 57, wherein the every two separator bodies being connected head-to-tail specifically comprises:
connecting a head end and a tail end for every two separator bodies by a connecting member

59. The manufacturing method of electrode assembly according to claim 58, wherein the connecting a head end and a tail end for every two separator bodies by a connecting member further comprises:
using one or more of polyethylene terephthalate, epoxy resin, polyurethane, unsaturated polyester resin, phenolic resin, polyacrylic resin, polyvinyl chloride resin, polysulfide rubber, silicone rubber, polyurethane rubber, neoprene rubber, and butyl rubber to form a splicing adhesive to bond a head end and a tail end for every two separator bodies.

60. A manufacturing device for preparing an electrode assembly, comprising:
a winding apparatus configured to stack and wind a positive electrode plate in the positive electrode plate roll, a separator body in the separator roll, and a negative electrode plate in the negative electrode plate roll, wherein at least one of the positive electrode plate roll, the separator roll, and the negative electrode plate roll is provided with a warning coating; and
a detection apparatus located on a delivery path of the separator body in the separator roll, wherein the detection apparatus is configured to detect whether the warning coating is provided on at least one of the positive electrode plate roll, the separator roll, and the negative electrode plate roll.

61. A secondary battery comprising an electrode assembly manufactured using the manufacturing method of electrode assembly according to any one of claims 40 to 59.

62. An electric device comprising the secondary battery according to claim 61, wherein the secondary battery is configured to supply electrical energy.
